Europäisches Patentamt

European Patent Office

Office européen des brevets

(19)

(11) Numéro de publication : **0 113 294 B1**

(12) **FASCICULE DE BREVET EUROPÉEN**

(45) Date de publication du fascicule du brevet :
06.05.87

(51) Int. Cl.⁴ : **H 04 N   9/64**, H 04 N  11/16

(21) Numéro de dépôt : 83402544.7

(22) Date de dépôt : 27.12.83

(54) **Dispositif numérique pour reconstituer une suite d'images vidéo PAL ou PAL-M à partir d'une trame unique.**

(30) Priorité : 30.12.82 FR 8222082

(43) Date de publication de la demande :
11.07.84 Bulletin 84/28

(45) Mention de la délivrance du brevet :
06.05.87 Bulletin 87/19

(84) Etats contractants désignés :
DE FR GB

(56) Documents cités :
GB-A- 2 031 684
SMPTE JOURNAL, vol. 87, no. 1, janvier 1978, New York (US) YOSHIZUMI ETO et al.: "Digital Processing Amplifier and Color Encoder", pages 15-19.

(73) Titulaire : THOMSON-CSF
173, Boulevard Haussmann
F-75379 Paris Cedex 08 (FR)

(72) Inventeur : Porrot, Pascal
THOMSON-CSF SCPI 173, bld Haussmann
F-75379 Paris Cedex 08 (FR)

(74) Mandataire : Turlèque, Clotilde et al
THOMSON-CSF SCPI 19, avenue de Messine
F-75008 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 113 294 B1

## Description

L'invention se rapporte à un dispositif permettant de déterminer les valeurs d'un signal vidéo pour une suite d'images, à partir des valeurs du signal vidéo correspondant à une seule image, ce signal étant codé selon le standard PAL ou PAL-M. Ce dispositif a de nombreuses applications.

Dans les magnétoscopes à enregistrement segmenté une trame d'image occupant plusieurs pistes sur la bande magnétique, l'obtention de la fonction arrêt sur image ou de la fonction ralenti pose un problème car il est difficile de relire plusieurs fois une même image sur la bande magnétique. Ces fonctions sont réalisées en numérisant le signal vidéo composite et en stockant dans une mémoire de trame les valeurs correspondant à une trame d'image. La fonction arrêt sur image est réalisée en lisant plusieurs fois le contenu de cette mémoire et en traitant les valeurs numériques lues pour reconstituer une suite d'images. Cette reconstitution est compliquée car les trames consécutives d'une suite d'images de télévision sont différentes dans leurs chronogrammes en ce qui concerne les signaux de synchronisation ligne, la phase des sous-porteuses de chrominance et même, pour les procédés PAL et PAL-M, en ce qui concerne le contenu de l'information de chrominance pour les lignes successives.

Dans les systèmes PAL et PAL-M un signal vidéo composite transmet simultanément une valeur de luminance Y(t) et deux valeurs de différence de couleur u(t) et v(t). Il est constitué par l'addition d'un signal de luminance et d'un signal de chrominance, ce dernier étant la somme de deux sous-porteuses respectivement modulées en amplitude par les signaux de différence de couleurs. Les deux sous-porteuses ont une même fréquence $f_{sc}$ mais sont en quadrature de phase. La modulation est à porteuse supprimée. Le signal de chrominance résultant de l'addition de ces deux sous-porteuses modulées a une amplitude variable représentative de la saturation de la teinte et une phase variable représentative de la teinte. Afin de supprimer les erreurs de teinte causées par des variations de phase au cours de la transmission, le signal de chrominance est constitué alternativement de (u(t), v(t)) et de (u(t), — v(t)) pour une ligne sur deux. Pour quatre trames consécutives les composantes du signal de chrominance sont par exemple :
— trame I et trame II :
  lignes impaires : u, v ;
  lignes paires : u, — v ;
— trame III et trame IV :
  lignes impaires : u, — v ;
  lignes paires : u, v ;

D'autre part le nombre de périodes des deux sous-porteuses pendant la durée de balayage d'une ligne n'est pas un nombre entier, donc pour retrouver un même signal électrique correspondant à une teinte donnée, c'est-à-dire les mêmes phases de sous-porteuses, le même numéro de ligne et la même parité de trame, il faut attendre huit trames pour les systèmes PAL et PAL-M. La reconstitution d'une suite d'images nécessite donc de reconstituer successivement huit trames distinctes. Un des problèmes posés est donc de reconstituer un signal de chrominance constitué de u(t) et v(t) à partir des valeurs d'un signal de chrominance constitué de u(t) et de v(t) ou — v(t) d'une ligne ou de plusieurs lignes de la trame stockée en mémoire.

Le problème de la reconstitution d'une suite d'images de télévision en couleurs peut se poser aussi dans le cas d'une transmission d'images par une ligne téléphonique, car le nombre d'images transmises est faible et la visualisation est réalisée à un rythme beaucoup plus rapide que la transmission et la reconstitution d'images.

La demande de brevet GB 2 031 684 décrit des dispositifs numériques pour reconstituer une suite d'images PAL, comportant : des moyens pour stocker les valeurs du signal vidéo composite d'une image ; des moyens pour décomposer un signal vidéo PAL composite en un signal de luminance et un signal chrominance ; des moyens pour reconstituer les valeurs de chrominance correspondant à une ligne d'une trame à reconstituer, à partir des valeurs de luminance de la ligne homologue, ou des deux lignes les plus proches dans la trame stockée ; des moyens pour reconstituer les valeurs de chrominance correspondant à une ligne d'une trame à reconstituer, à partir des valeurs de chrominance de la ligne homologue ou des deux lignes les plus proches dans l'image stockée, ces moyens comportant principalement au moins un dispositif à retard d'une ligne, deux dispositifs d'inversion, deux commutateurs ; et un additionneur ; et des moyens pour reconstituer un signal vidéo composite à partir des valeurs reconstituées du signal de chrominance et du signal de luminance.

Les valeurs de chrominance reconstituées ne sont jamais égales aux valeurs d'origine mais sont toujours égales à la demi-somme de deux valeurs de chrominance lues dans la mémoire et éventuellement retardées, puis aiguillées vers l'additionneur. Ces dispositifs ont pour inconvénient de fournir un signal de chrominance dont la phase est entâchée d'une erreur variant en fonction du numéro de la trame à reconstituer, et pouvant atteindre une valeur allant jusqu'à une ± 1 ligne. Ceci se traduit par un sautillement des transitions colorées horizontales puisqu'au cours du cycle de huit trames l'erreur entâchant la valeur du signal de chrominance reconstitué varie selon la trame et se traduit visuellement par une variation de teinte et une variation de position de la transition colorée.

Le dispositif selon l'invention remédie à ces inconvénients grâce à des moyens permettant de reconstituer les valeurs du signal vidéo de chaque ligne, à partir de celles du signal vidéo correspondant à la ligne homologue ou des deux lignes les plus proches de la trame mémorisée, en inversant le signe de la composante v(t) et en recalant sa phase chaque fois que cela est nécessaire.

Selon l'invention, un dispositif numérique pour reconstituer une suite d'images vidéo PAL ou PAL-M à partir d'une trame unique, stockée en mémoire, comportant :

— des moyens pour échantillonner et numériser un signal vidéo composite ;

— des moyens pour stocker et restituer les valeurs du signal vidéo composite correspondant à une trame ;

— des moyens pour déterminer une valeur de luminance et une valeur de chrominance pour chaque valeur de signal vidéo composite restituée ;

— des moyens pour reconstituer les valeurs de luminance correspondant à une ligne d'une trame à reconstituer, à partir des valeurs de luminance de la ligne homologue, ou des deux lignes les plus proches, dans la trame stockée ;

— des moyens pour reconstituer les valeurs de chrominance correspondant à une ligne d'une trame à reconstituer, à partir des valeurs de chrominance de la ligne homologue ou des deux lignes les plus proches dans la trame stockée, ces moyens comportant : des moyens pour inverser l'une des composantes d'un signal de chrominance PAL ou PAL-M, et au moins un dispositif à retard d'une ligne, pour disposer de deux valeurs de chrominance $C_{m-1}$ et $C_m$ correspondant à deux points homologues de deux lignes successives de la trame·stockée ;

— un additionneur pour fournir un signal vidéo composite en additionnant les valeurs fournies par les moyens pour reconstituer les valeurs de luminance, avec les valeurs fournies par les moyens pour reconstituer les valeurs de chrominance ;

caractérisé en ce que les moyens pour reconstituer les valeurs de chrominance comportent en outre :

— un dispositif de décalage de la phase des valeurs d'un signal de chrominance, ayant des entrées de commande commandant un déphasage de $+ \pi/2$, ou $- \pi/2$ ;

— des moyens de calcul pour calculer une valeur de chrominance reconstituée ;

— des moyens de commande commandant les moyens de calcul et le dispositif de décalage de phase, en fonction du numéro de la trame à reconstituer et en fonction du numéro de la trame stockée.

L'invention sera mieux comprise et d'autres détails apparaîtront à l'aide de la description ci-dessous et des figures l'accompagnant :

Les figures 1 à 3  représentent des diagrammes vectoriels illustrant le procédé d'inversion de la composante v(t) mis en œuvre dans le dispositif selon l'invention ;

La figure 4  est le schéma synoptique d'un exemple de réalisation d'un dispositif pour la mise en œuvre de ce procédé ;

Les figures 5 à 9  illustrent le fonctionnement du dispositif selon l'invention ;

La figure 10  représente le schéma synoptique d'un exemple de réalisation de ce dispositif ;

Les figures 11 et 12  représentent le schéma synoptique plus détaillé de deux parties de ce dispositif ;

Les figures 13, 14a, 14b, 14c, 14d, 14e  illustrent le fonctionnement d'une partie de ce dispositif.

Le dispositif selon l'invention traite un signal de chrominance PAL ou PAL-M. Celui-ci étant constitué de l'addition de deux sous-porteuses en quadrature de phase, modulées en amplitude avec suppression de la porteuse, il peut être représenté par l'expression mathématique suivante :

$$C(t) = u(t) \cdot \sin \omega(t) \pm v(t) \cdot \cos \omega t \qquad (1)$$

Le signe de cette formule dépend de la parité de la ligne et du numéro de la trame. Par exemple, dans la description qui suit le signe considéré est + : u(t) et v(t) sont des valeurs algébriques, et $\omega = 2\pi \cdot f_{sc}$.

Soit

$$U(t) = u(t) \cdot \sin \omega t$$

Soit

$$V(t) = v(t) \cdot \cos \omega t$$

Dans une première étape, la description ci-dessous considère le problème de l'inversion d'une composante de chrominance. Dans une seconde étape elle considère le problème associé, du recalage de la phase.

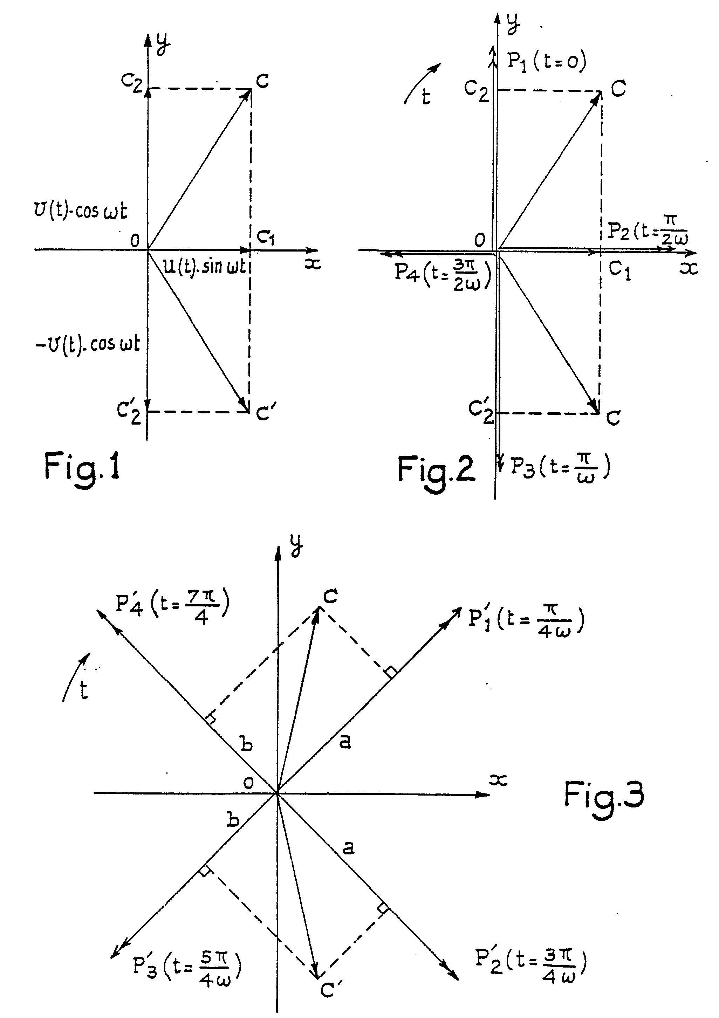

Les valeurs C(t), U(t) et V(t) peuvent être considérées comme les valeurs algébriques des projections sur un axe passant par un point·O, de vecteurs $\overrightarrow{OC}$, $\overrightarrow{OC_1}$, $\overrightarrow{OC_2}$, tels que $\overrightarrow{OC} = \overrightarrow{OC_1} + \overrightarrow{OC_2}$ et tels que $\overrightarrow{OC_1}$ et $\overrightarrow{OC_2}$ sont orthogonaux. Ces vecteurs sont représentés sur la figure 1, dans un repère Oxy où l'axe Ox choisi correspond à la phase $\omega t$. Dans ce cas le vecteur $\overrightarrow{OC_1}$, correspondant à u(t) · sin ωt est confondu avec l'axe Ox, et le vecteur $\overrightarrow{OC_2}$ qui lui est orthogonal est confondu avec un axe Oy. Le vecteur $\overrightarrow{OC_2}$ correspondant à v(t) · cos ωt a une avance de phase π/2 par rapport à $\overrightarrow{OC_1}$.

3

Le but du procédé d'inversion est de remplacer la composante de valeur $V(t) = v(t) \cdot \cos \omega t$ représentée par le vecteur $\overrightarrow{OC_2}$ par une composante de valeur $-V(t) = -v(t) \cdot \cos \omega t$, représentée par un vecteur $\overrightarrow{OC'_2}$ opposé à $\overrightarrow{OC_2}$. Le signal de chrominance à obtenir est dit signal conjugué, sa valeur est :

$$C'(t) = u(t) \cdot \sin \omega t - v(t) \cdot \cos \omega t \qquad (2)$$

Il peut être représenté dans le repère Oxy par un vecteur $\overrightarrow{OC'}$, somme des deux vecteurs orthogonaux $\overrightarrow{OC_1}$ et $\overrightarrow{OC'_2}$. Le vecteur résultant $\overrightarrow{OC'}$ est donc symétrique de $\overrightarrow{OC}$ par rapport à Ox.

La valeur C(t) du signal de chrominance obtenue par un échantillonnage et une numérisation à un instant t peut être considérée comme la valeur algébrique de la projection de $\overrightarrow{OC}$ sur un axe passant par O et dont la position dans le repère Oxy est fonction de l'instant t. Cet axe est dit axe d'échantillonnage. Pour des instants d'échantillonnage successifs les axes d'échantillonnages se succèdent dans le sens contraire du sens trigonométrique du repère Oxy. La fréquence d'échantillonnage a pour valeur $Fech = 4f_{sc}$ ; les axes d'échantillonnages pour 4 échantillonnages consécutifs sont donc 4 axes : $OP_1$, $OP_2$, $OP_3$, $OP_4$, fixes par rapport au repère Oxy, et orthogonaux entre eux.

La figure 2 représente les projections du vecteur $\overrightarrow{OC}$ sur les axes $OP_1$, $OP_2$, $OP_3$, $OP_4$, dans le cas où l'échantillonnage est réalisé aux instants $t = K \cdot \pi/2\omega$, avec k = 0, 1, 2, ..., qui correspondent aux instants où la sous-porteuse $\sin \omega t$ passe par 0 ou un extrémum. Dans ce cas les axes d'échantillonnages $OP_1$, $OP_2$ sont confondus avec les axes Oy et Ox respectivement, et les axes $OP_3$ et $OP_4$ sont opposés à Oy et Ox respectivement. Leur extrémité est représentée par une double flèche. La figure 2 montre que les instants d'échantillonnages ainsi choisis permettent d'obtenir des échantillons dont la valeur ne dépend que d'une seule composante, U(t) ou V(t). Les projections du vecteur $\overrightarrow{OC}$ sur les axes d'échantillonnage et les valeurs C(t) calculées d'après la formule (1) sont les suivantes :

| t | 0 | $\frac{\pi}{2\omega}$ | $\frac{\pi}{\omega}$ | $\frac{3\pi}{2\omega}$ | $\frac{2\pi}{\omega}$ | $\frac{5\pi}{2\omega}$ | $\frac{3\pi}{\omega}$ | $\frac{7\pi}{2\omega}$ | $\frac{4\pi}{\omega}$ | ... |
|---|---|---|---|---|---|---|---|---|---|---|
| | $\overrightarrow{OC_2}$ | $\overrightarrow{OC_1}$ | $-\overrightarrow{OC_2}$ | $-\overrightarrow{OC_1}$ | $\overrightarrow{OC_2}$ | $\overrightarrow{OC_1}$ | $-\overrightarrow{OC_2}$ | $-\overrightarrow{OC_1}$ | $\overrightarrow{OC_2}$ | ... |
| C(t) | $v(0)$ | $u(\frac{\pi}{2\omega})$ | $-v(\frac{\pi}{\omega})$ | $-u(\frac{3\pi}{2\omega})$ | $v(\frac{2\pi}{\omega})$ | $u(\frac{5\pi}{2\omega})$ | $-v(\frac{3\pi}{\omega})$ | $-u(\frac{7\pi}{2\omega})$ | $v(\frac{4\pi}{\omega})$ | ... |

Il apparaît dans ce tableau que le choix judicieux de la fréquence d'échantillonnage et de sa phase par rapport à celle des deux sous-porteuses permet de disposer alternativement d'une valeur de la composante u(t) seule et d'une valeur de la composante v(t) seule.

Considérons quelle suite de valeurs serait obtenue en échantillonnant le signal conjugué C'(t) du signal de chrominance, à la fréquence $Fech = 4f_{sc}$. Si les instants d'échantillonnage étaient $t = k \cdot \pi/2\omega$ avec k = 0, 1, 2, ..., les axes d'échantillonnage $OP_1$, $OP_2$, $OP_3$, $OP_4$ seraient les mêmes que précédemment. Les projections de $\overrightarrow{OC'}$ sur les axes d'échantillonnage et les valeurs de C'(t) calculées selon la formule (2) seraient alors :

| t | 0 | $\frac{\pi}{2\omega}$ | $\frac{\pi}{\omega}$ | $\frac{3\pi}{2\omega}$ | $\frac{2\pi}{\omega}$ | $\frac{5\pi}{2\omega}$ | $\frac{3\pi}{\omega}$ | $\frac{7\pi}{2\omega}$ | $\frac{4\pi}{\omega}$ | ... |
|---|---|---|---|---|---|---|---|---|---|---|
| | $-\overrightarrow{OC'_2}$ | $\overrightarrow{OC_1}$ | $\overrightarrow{OC'_2}$ | $-\overrightarrow{OC_1}$ | $-\overrightarrow{OC'_2}$ | $\overrightarrow{OC_1}$ | $\overrightarrow{OC'_2}$ | $-\overrightarrow{OC_1}$ | $-\overrightarrow{OC'_2}$ | ... |
| C'(t) | $-v(o)$ | $u(\frac{\pi}{2\omega})$ | $v(\frac{\pi}{\omega})$ | $-u(\frac{3\pi}{2\omega})$ | $-v(\frac{2\pi}{\omega})$ | $u(\frac{5\pi}{2\omega})$ | $v(\frac{3\pi}{\omega})$ | $-u(\frac{7\pi}{2\omega})$ | $-v(\frac{4\pi}{\omega})$ | ... |

Il apparaît que les valeurs absolues C'(t) aux mêmes instants d'échantillonnage seraient égales aux valeurs C(t) et leurs signes différeraient une fois sur deux.

C'(t) = C(t) pour

$$t = \frac{\pi}{2\omega} + k' \cdot \frac{\pi}{\omega},$$

$$C'(t) = -C(t) \text{ pour } t = k' \cdot \pi/\omega, \text{ avec } k' = 0, 1, 2, ...$$

Il est donc possible de déterminer une suite de valeurs C'(t) du signal de chrominance conjugué, pour $t = k \cdot \pi/2\omega$ avec k = 0, 1, 2, ..., en échantillonnant et numérisant à ces instants le signal de chrominance, puis en inversant le signe d'une valeur sur deux dans la suite des valeurs C(t) ainsi obtenues ; l'inversion

4

de la composante V(t) = v(t) · cos ωt étant obtenue en inversant le signe des valeurs C(t) correspondant aux instants t = k' · π/ω avec k' = 0, 1, 2, ...

La mise en œuvre de ce procédé peut être réalisée par un dispositif simple qui sera décrit plus loin.

Dans le procédé décrit ci-dessus, par hypothèse l'échantillonnage commence à l'instant t = 0 où la fonction sin ωt a la valeur 0 et croît vers les valeurs positives, mais il est possible d'échantillonner le signal C(t) avec un retard égal à un nombre entier de périodes d'échantillonnage, sans que la suite des valeurs C'(t) soit modifiée. Par contre la phase de l'opération d'inversion de signe doit rester la même par rapport à la sous-porteuse modulée par u(t). L'opération d'inversion de signe est réalisée aux instants où la sous-porteuse modulée par u(t) passe par la valeur 0.

Si c'est la composante u(t) qui est à inverser il suffit de faire le même échantillonnage, mais en inversant le signe des valeurs C(t) pour t = (π/2ω) + (kπ/ω) car alors C'(t) = u(t) · sin(t) — v(t) · cos ωt est remplacé par

$$— C'(t) = — u(t) \cdot \sin \omega t + v(t) \cdot \cos \omega t$$

La figure 3 représente les axes d'échantillonnage OP'$_1$, OP'$_2$, OP'$_3$ et OP'$_4$ correspondant aux instants :

$$t = \frac{\pi}{4\,\omega} + i \cdot \frac{\pi}{2\,\omega}$$

pour i = 0, 1, 2, ...

qui correspondent à un échantillonnage retardé d'une demi-période d'échantillonnage par rapport aux instants de passage à 0 de la sous-porteuse sin ωt. L'axe OP'$_1$ correspondant aux instants d'échantillonnage t = π/4ω modulo 2π/ω fait un angle $(\overrightarrow{OY}, \overrightarrow{OP'}_1) = — π/4$. L'axe OP'$_2$ correspondant aux instants d'échantillonnage t = 3π/4ω modulo 2π/ω fait un angle $(\overrightarrow{Oy}, \overrightarrow{OP'}_2) = — 3π/4ω$. L'axe OP'$_3$ correspondant aux instants d'échantillonnage t = 5π/4ω modulo 2π/ω fait un angle $(\overrightarrow{Oy}, \overrightarrow{OP'}_3) = — 5π/4ω$. L'axe OP'$_4$ correspondant aux instants d'échantillonnage t = 7π/4ω modulo 2π/ω fait un angle $(\overrightarrow{Oy}, \overrightarrow{OP'}_4) = — 7π/4ω$.

La figure 3 représente les projections du vecteur $\overrightarrow{OC}$ aux instants d'échantillonnage t = π/4ω, t = 3π/4ω, t = 5π/4ω et t = 7π/4ω respectivement. Elle met en évidence que les projections de $\overrightarrow{OC}$ sur quatre axes d'échantillonnage successifs sont liées par des relations simples, d'une part à cause de la position particulière des axes OP'$_1$, OP'$_2$, OP'$_3$ et OP'$_4$ par rapport aux axes Ox, Oy, due aux choix des instants d'échantillonnage, mais aussi du fait que l'amplitude du vecteur $\overrightarrow{OC}$ et son déphasage par rapport à ωt peuvent être considérés comme constants pour un intervalle de temps égal à quatre périodes d'échantillonnage. En effet la bande passante du signal de chrominance étant d'environ 0,5 MHz pour une sous-porteuse de fréquence 4,43 MHz l'amplitude des deux sous-porteuses et leur phase ne varie pratiquement pas pendant une période de sous-porteuse. Soit a et b la valeur absolue de la projection de $\overrightarrow{OC}$ sur les axes d'échantillonnage OP'$_1$ et OP'$_2$ respectivement. Cette valeur est alors a et b pour les axes OP'$_3$ et OP'$_4$ respectivement.

La figure 3 représente la projection du vecteur $\overrightarrow{OC'}$ successivement sur les mêmes axes OP'$_1$, OP'$_2$, OP'$_3$ et OP'$_4$. Il apparaît que la valeur absolue de la projection du vecteur $\overrightarrow{OC'}$ sur ces axes est facile à déduire des valeurs des projections de $\overrightarrow{OC}$, puisque les vecteurs $\overrightarrow{OC}$ et $\overrightarrow{OC'}$ sont symétriques par rapport à Ox. Ces valeurs sont b, a, b, a respectivement. Il y a donc une relation assez simple entre les valeurs d'échantillons de C(t) et celles de C'(t) pour un échantillonnage qui serait effectué aux mêmes instants

$$t = \frac{\pi}{4\,\omega} + i \cdot \frac{\pi}{2\,\omega}$$

avec i = 0, 1, 2, ... Les valeurs algébriques de ces échantillons peuvent être calculées par les formules (1) et (2) :

| $t$ | $C(t)$ | $C'(t)$ |
|---|---|---|
| $\dfrac{\pi}{4\omega}$ | $\dfrac{\sqrt{2}}{2} u(\dfrac{\pi}{4\omega}) + \dfrac{\sqrt{2}}{2} v(\dfrac{\pi}{4\omega})$ | $\dfrac{\sqrt{2}}{2} u(\dfrac{\pi}{4\omega}) - \dfrac{\sqrt{2}}{2} v(\dfrac{\pi}{4\omega})$ |
| $\dfrac{3\pi}{4\omega}$ | $\dfrac{\sqrt{2}}{2} u(\dfrac{3\pi}{4\omega}) - \dfrac{\sqrt{2}}{2} v(\dfrac{3\pi}{4\omega})$ | $\dfrac{\sqrt{2}}{2} u(\dfrac{3\pi}{4\omega}) + \dfrac{\sqrt{2}}{2} v(\dfrac{3\pi}{4\omega})$ |
| $\dfrac{5\pi}{4\omega}$ | $-\dfrac{\sqrt{2}}{2} u(\dfrac{5\pi}{4\omega}) - \dfrac{\sqrt{2}}{2} v(\dfrac{5\pi}{4\omega})$ | $-\dfrac{\sqrt{2}}{2} u(\dfrac{5\pi}{4\omega}) + \dfrac{\sqrt{2}}{2} v(\dfrac{5\pi}{4\omega})$ |
| $\dfrac{7\pi}{4\omega}$ | $-\dfrac{\sqrt{2}}{2} u(\dfrac{7\pi}{4\omega}) + \dfrac{\sqrt{2}}{2} v(\dfrac{7\pi}{4\omega})$ | $-\dfrac{\sqrt{2}}{2} u(\dfrac{7\pi}{4\omega}) - \dfrac{\sqrt{2}}{2} v(\dfrac{7\pi}{4\omega})$ |

(Suite)

| $\tau$ | $C(t)$ | $C'(\tau)$ |
|---|---|---|
| $\dfrac{9\pi}{4\omega}$ | $\dfrac{\sqrt{2}}{2}\,u\left(\dfrac{9\pi}{4\omega}\right)+\dfrac{\sqrt{2}}{2}\,v\left(\dfrac{9\pi}{4\omega}\right)$ | $\dfrac{\sqrt{2}}{2}\,u\left(\dfrac{9\pi}{4\omega}\right)-\dfrac{\sqrt{2}}{2}\,v\left(\dfrac{9\pi}{4\omega}\right)$ |
| $\dfrac{11\pi}{4\omega}$ | $\dfrac{\sqrt{2}}{2}\,u\left(\dfrac{11\pi}{4\omega}\right)-\dfrac{\sqrt{2}}{2}\,v\left(\dfrac{11\pi}{4\omega}\right)$ | $\dfrac{\sqrt{2}}{2}\,u\left(\dfrac{9\pi}{4\omega}\right)+\dfrac{\sqrt{2}}{2}\,v\left(\dfrac{11\pi}{4\omega}\right)$ |
| $\dfrac{13\pi}{4\omega}$ | $-\dfrac{\sqrt{2}}{2}\,u\left(\dfrac{13\pi}{4\omega}\right)-\dfrac{\sqrt{2}}{2}\,v\left(\dfrac{13\pi}{4\omega}\right)$ | $-\dfrac{\sqrt{2}}{2}\,u\left(\dfrac{13\pi}{4\omega}\right)+\dfrac{\sqrt{2}}{2}\,v\left(\dfrac{13\pi}{4\omega}\right)$ |
| $\dfrac{15\pi}{4\omega}$ | $-\dfrac{\sqrt{2}}{2}\,u\left(\dfrac{15\pi}{4\omega}\right)+\dfrac{\sqrt{2}}{2}\,v\left(\dfrac{15\pi}{4\omega}\right)$ | $-\dfrac{\sqrt{2}}{2}\,u\left(\dfrac{15\pi}{4\omega}\right)-\dfrac{\sqrt{2}}{2}\,v\left(\dfrac{\pi}{4\omega}\right)$ |
| etc | etc | etc |

Il apparaît que les valeurs algébriques des coefficients de u(t) et v(t) sont les mêmes pour :

$$C\left(\frac{\pi}{4\omega}+n\cdot\frac{\pi}{\omega}\right)\quad\text{et}\quad C'\left(\frac{3\pi}{4\omega}+n\cdot\frac{\pi}{\omega}\right)$$

pour n = 0, 1, 2, ... et il apparaît que les deux coefficients ont simultanément une valeur opposée pour :

$$C\left(\frac{3\pi}{4\omega}+n\cdot\frac{\pi}{\omega}\right)\quad\text{et}\quad C'\left(\frac{5\pi}{4\omega}+n\cdot\frac{\pi}{\omega}\right)$$

Ces couples de valeurs, ayant des coefficients identiques ou respectivement opposés, correspondent à des instants séparés d'un temps $2\pi/4\omega$, soit une période d'échantillonnage. Il est donc possible d'obtenir une suite de valeurs C'(t) du signal de chrominance conjugué en échantillonnant le signal de chrominance à la fréquence $4f_{sc}$ avec un retard $\pi/4\omega$, c'est-à-dire une demi-période d'échantillonnage, par rapport aux instants où la sous-porteuse modulée par u(t) passe par zéro, puis en retardant d'une période d'échantillonnage ($2\pi/4\omega$) la suite des valeurs C(t) du signal de chrominance et en changeant le signe d'une valeur sur deux. Dans cet exemple, pour inverser la composante $v(t)\cdot\cos\omega t$ il faut inverser le signe des valeurs

$$C\left(\frac{3\pi}{4\omega}+i\cdot\frac{\pi}{\omega}\right).$$

Pour inverser la composante $u(t)\cdot\sin\omega t$ au lieu de $v(t)\cdot\cos\omega t$ il suffirait d'inverser les valeurs

$$C\left(\frac{\pi}{4\omega}+i\cdot\frac{\pi}{\omega}\right),$$

car alors :

$$C'(t) = u(t)\cdot\sin\omega t - v(t)\cdot\cos\omega t \text{ devient } -C'(t) = -u(t)\cdot\sin\omega t + v(t)\cdot\cos\omega t$$

Il est à remarquer que si l'échantillonnage est retardé d'un nombre impair de demi-périodes d'échantillonnage par rapport aux instants de passage à zéro de l'une des sous-porteuses l'échantillonnage fournit la même suite de valeurs quel que soit ce nombre de demi-périodes.

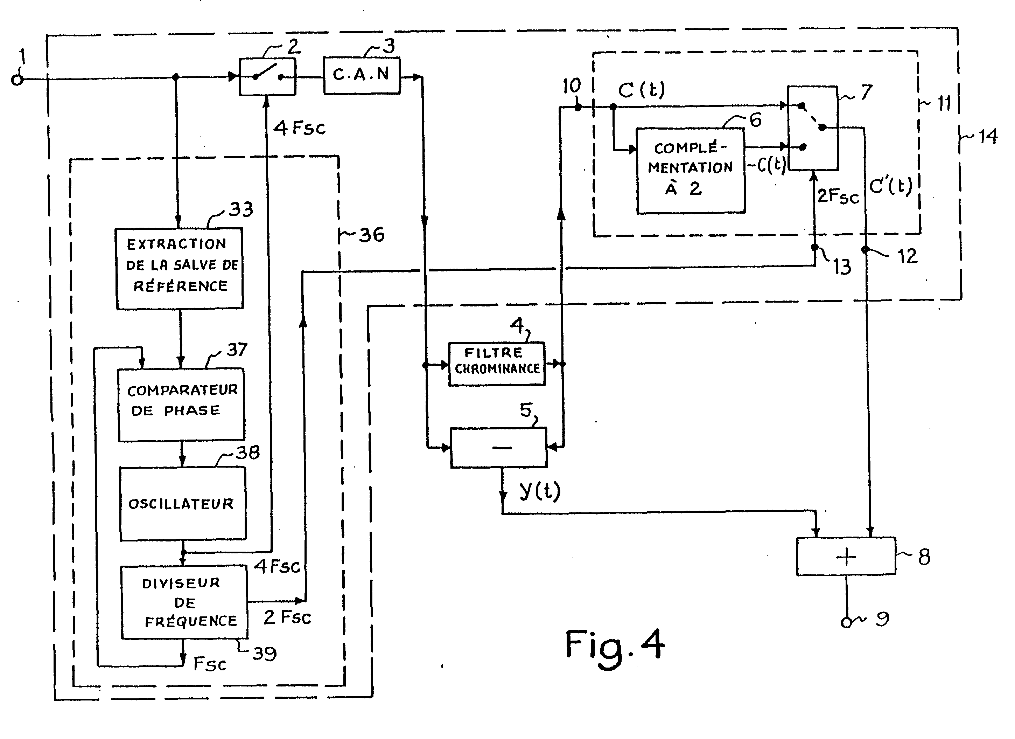

La figure 4 représente le schéma synoptique d'un exemple de réalisation d'un dispositif numérique d'inversion d'une composante de chrominance d'un signal vidéo composite PAL ou PAL-M appliquant le procédé décrit précédemment. Il comporte : des moyens 2, 3, 4, 5 pour numériser un signal vidéo composite et le décomposer en un signal de luminance et un signal de chrominance ; un dispositif numérique 14 d'inversion d'une des composantes d'un signal de chrominance ; et un additionneur 8 pour reconstituer un signal vidéo composite.

Dans cet exemple de réalisation une partie des éléments du dispositif d'inversion 14, à savoir un échantillonneur 2 et un convertisseur analogique-numérique 3 qui ont pour rôle d'échantillonner et de numériser le signal de chrominance, sont utilisés aussi pour échantillonner le signal vidéo composite, préalablement à la décomposition de celui-ci en un signal de chrominance et un signal de luminance par un filtre numérique 4, et un soustracteur numérique 5. Il est équivalent de décomposer le signal vidéo composite puis de numériser le signal de chrominance, ou bien de numériser le signal vidéo composite puis de filtrer le signal de chrominance par un filtre numérique, comme c'est le cas dans cet exemple. Le dispositif d'inversion 14 comporte, outre l'échantillonneur 2 et le convertisseur numérique-analogique 3,

**0 113 294**

un générateur de signaux de commande 36, et un dispositif de calcul 11. Le dispositif 11 est constitué d'un dispositif 6 de complémentation à 2 et d'un multiplexeur 7 à deux entrées et une sortie.

Un signal vidéo composite analogique est appliqué à une borne d'entrée 1, est échantillonné par l'échantillonneur 2 à une fréquence égale à 4 fois la fréquence des sous-porteuses $f_{sc}$, puis les amplitudes des échantillons sont converties en valeurs numériques par le convertisseur analogique-numérique 3. Le filtre 4 détermine une valeur de chrominance C(t) pour chaque valeur du signal composite et fournit cette valeur de chrominance à une première entrée du soustracteur 5. Une seconde entrée du soustracteur 5 reçoit la valeur numérique fournie par la sortie du convertisseur analogique-numérique 3, et une sortie du soustracteur 5 fournit une valeur de luminance Y(t) pour chaque valeur du signal vidéo composite. La valeur C(t) est appliquée à une borne d'entrée 10 du dispositif de calcul 11 et ce dernier fournit sur une borne de sortie 12 une valeur C'(t) du signal de chrominance conjugué du signal de chrominance dont la valeur est C(t). La valeur C'(t) est appliquée à une première entrée de l'additionneur 8 qui reçoit sur une seconde entrée la valeur Y(t). Une sortie de l'additionneur 8 est reliée à une borne de sortie 9 à laquelle il fournit une valeur d'un signal vidéo composite ayant une composante de chrominance de signe inversé par rapport au signal vidéo composite appliqué à la borne d'entrée 1.

Le dispositif de calcul 11 comporte une borne d'entrée 13 recevant un signal pour commander le multiplexeur 7 de telle façon qu'il relie alternativement sa première entrée et sa seconde entrée à sa sortie, à une fréquence Fech/2 = $2f_{sc}$. La valeur C(t) est appliquée à la première entrée du multiplexeur 7 et à l'entrée du dispositif 6 qui réalise un changement de signe. La sortie du dispositif 6 est reliée à la seconde entrée du multiplexeur 7. La sortie du multiplexeur 7 est reliée à la borne de sortie 12 du dispositif 11. Le multiplexeur 7 transmet alternativement une valeur C(t) et une valeur — C(t). Si, par exemple, l'échantillonnage réalisé par l'échantillonneur 2 est en phase avec la sous-porteuse sin $\omega$t, et si à l'instant t = 0 le multiplexeur 7 relie sa première entrée à sa sortie, c'est la composante v(t) qui est inversée par le dispositif 11. Pour inverser la composante u(t) au lieu de la composante v(t) il suffirait d'inverser le signal de commande du multiplexeur 7.

Les signaux de fréquence $4f_{sc}$ et $2f_{sc}$ commandant l'échantillonneur 2 et le multiplexeur 7 sont asservis, en fréquence et en phase, sur la salve de référence précédant le signal vidéo de chaque ligne d'image par le générateur de signaux de commande 36. Ce générateur 36 comporte : un dispositif 33 d'extraction de la salve de référence, un comparateur de phase 37, un oscillateur 38, et un diviseur de fréquence 39. Une entrée du générateur 36 est reliée à la borne d'entrée 1 et fournit au dispositif 33 le signal vidéo composite. Le dispositif 33 extrait du signal composite la salve de référence et la fournit à une première entrée du comparateur de phase 37. Une sortie du comparateur de phase 37 commande la fréquence et la phase de l'oscillateur 38 de telle façon qu'il fournisse un signal de fréquence $4f_{sc}$ asservi sur la fréquence $f_{sc}$ et la phase de la salve de référence. L'oscillateur 18 est constitué d'un oscillateur à quartz dont la fréquence est réglable sur une petite plage. Le diviseur de fréquence 39 divise la fréquence de ce signal par 2 et par 4. La sortie de l'oscillateur 38 constitue une première sortie du générateur 36 et fournit un premier signal de commande à une entrée de commande de l'échantillonneur 2. Une première sortie du diviseur 39 fournit un signal de fréquence $f_{sc}$ à une seconde entrée du comparateur de phase 37. Une seconde sortie du diviseur 39 fournit un second signal de commande dont le rapport cyclique est 1/2 et dont la fréquence est $2f_{sc}$, elle constitue une seconde sortie du générateur de signaux de commande 36 et est reliée à la borne d'entrée 13 du dispositif 11.

Selon une variante de réalisation, les signaux de commande de l'échantillonneur 2 et du multiplexeur 7 sont retardés d'une demi-période d'échantillonnage aux instants de passage à zéro de l'une des sous-porteuses, il est nécessaire alors de remettre les valeurs du signal de chrominance conjugué en phase avec les valeurs de luminance avant de reconstituer un signal vidéo composite. Pour cela il suffit de prévoir un registre commandé par le signal de commande d'échantillonnage pour réaliser un retard d'une période d'échantillonnage. Ce registre est intercalé par exemple entre la borne de sortie 12 et la première entrée de l'additionneur 8. D'autre part la décomposition du signal vidéo composite peut être réalisée par un filtre analogique situé en amont de l'échantillonneur 2, celui-ci n'échantillonnant que le signal de chrominance. Un convertisseur numérique-analogique supplémentaire est alors intercalé entre la borne de sortie 12 du dispositif 11 et la première entrée de l'additionneur 8. L'additionneur 8 est alors analogique, il reçoit sur sa seconde entrée un signal de luminance fourni par un filtre analogique et fournit sur sa sortie un signal composite analogique.

Ce dispositif n'est qu'un des moyens constituant le dispositif selon l'invention. La description ci-après détaille le problème du recalage de phase et les moyens mis en œuvre pour le résoudre.

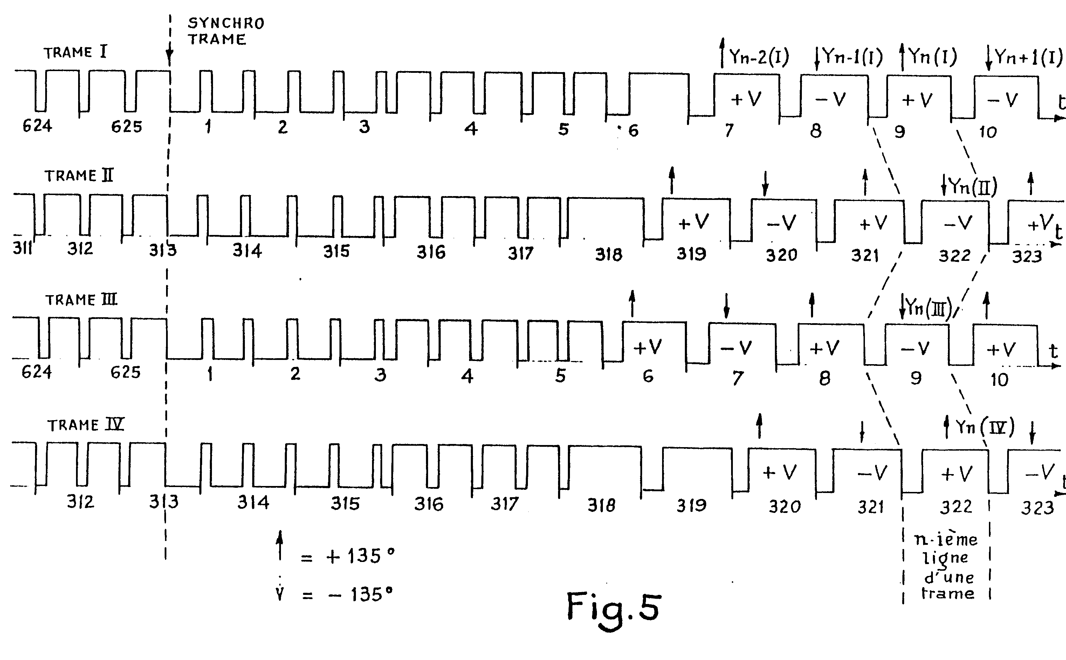

La figure 5 représente le chronogramme des signaux de synchronisation pour quatre trames consécutives, I, II, III, et IV, selon les normes du procédé de transmission PAL ou PAL-M. Les quatre autres trames, V, VI, VII, et VIII, qui constituent le reste du cycle, ont les mêmes signaux de synchronisation et ne sont pas représentées sur la figure 5. Sur cette figure les flèches dirigées vers le haut indiquent les lignes pour lesquelles la phase de la sous-porteuse transmise dans la salve de référence est égale à 135° par rapport à la sous-porteuse de u(t). Les flèches dirigées vers le bas désignent les lignes pour lesquelles cette phase est de — 135° par rapport à la sous-porteuse de u(t). Les symboles + V et — V désignent respectivement les lignes pour lesquelles la composante v(t) n'est pas inversée et les lignes pour lesquelles cette composante est inversée. Les numéros inscrits en-dessous de chaque chronogramme indiquent le rang de chaque ligne dans une image, des pointillés encadrent les lignes de rang n dans

7

chacune des quatre trames. Dans les trames I, II, III, et IV, les lignes de rang n, qui sont prises à titre d'exemple, sont respectivement les lignes de rang 9, 322, 9, et 322 dans les images. Dans cet exemple la trame I est supposée être stockée en mémoire et les trames II à VIII être à reconstituer. En ce qui concerne la composante v(t) il apparaît sur la figure 5 que pour reconstituer les lignes de rang n des trames II, III, VI, et VII à partir de la ligne de rang n de la trame I, il faut inverser la composante v(t). En ce qui concerne la phase, la reconstitution est plus complexe. Pour le procédé PAL, la fréquence des deux sous-porteuses est égale à :

$$f_{sc} = \left( \frac{1\,135}{4} + \frac{1}{625} \right) \cdot f_H,$$

où $f_H$ est la fréquence de balayage horizontal.

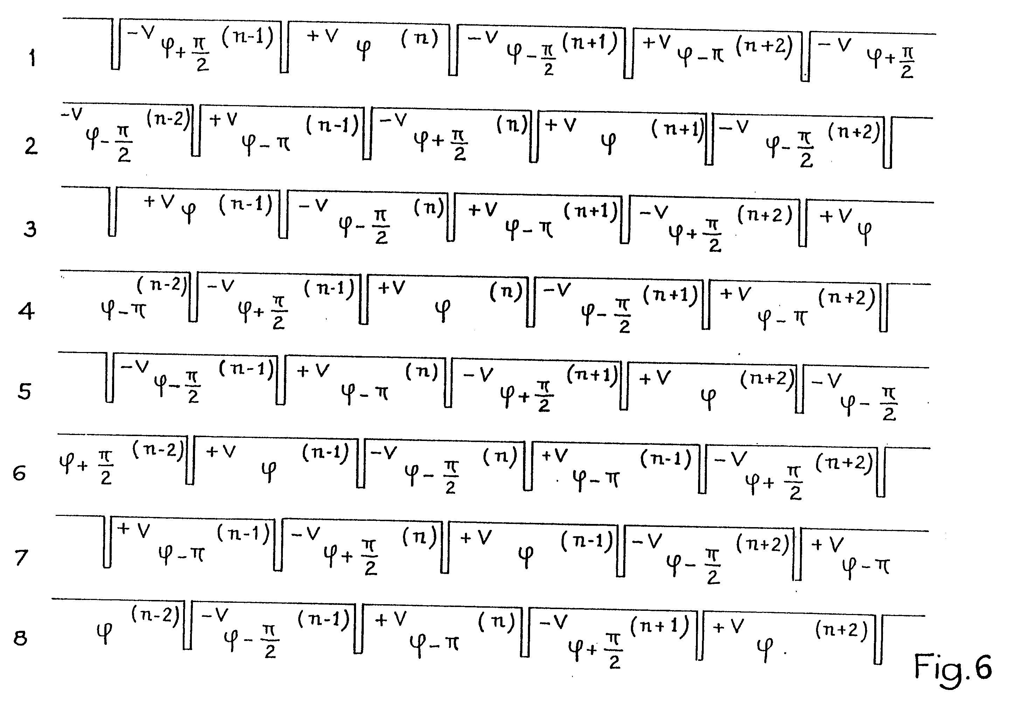

Le nombre de périodes des sous-porteuses n'étant pas un nombre entier pendant la durée de balayage de chaque ligne la phase des sous-porteuses glisse par rapport à la phase des impulsions de synchronisation ligne. En considérant comme instant d'initialisation d'une trame la dernière impulsion de pré-égalisation de la suppression trame, et connaissant le nombre de périodes des sous-porteuses correspondant à la durée d'une ligne, il est possible de calculer, en fonction du numéro d'une ligne et du numéro de la trame à laquelle elle appartient, la phase de la sous-porteuse au cours de cette ligne. Par exemple supposons que la trame stockée en mémoire est la trame numéro I du cycle et que la ligne en cours de constitution est la $n^{ième}$ ligne de l'une des sept autres trames. Pour la $n^{ième}$ ligne de la trame numéro I, qui est stockée, la phase de la sous-porteuse de la composante v(t) par rapport à la synchronisation ligne est par exemple $\varphi$. Le tableau représenté sur la figure 6 indique alors les valeurs de phase pour la $n^{ième}$ ligne et les lignes voisines dans les trames I à VIII du cycle, dans le cas où on néglige le terme 1/625 dans la formule donnant la fréquence des sous-porteuses. Dans ce cas les écarts de phase par rapport à $\varphi$ sont exprimés par des valeurs simples : $\pm \pi/2$ ou $\pm \pi$ ou 0. L'erreur de phase due à cette approximation est négligeable pour deux lignes adjacentes. Par exemple les valeurs du signal vidéo composite de la $n^{ième}$ ligne de la trame numéro II sont reconstituées à partir des valeurs du signal vidéo composite de la $n^{ième}$ et de la $n+1^{ième}$ ligne de la trame numéro I. Afin de réaliser la demi-somme des signaux de chrominance de la $n^{ième}$ et de la $n+1^{ième}$ ligne de la trame numéro I il est nécessaire d'inverser la composante v(t) de la $n^{ième}$ ligne et d'augmenter la phase de la sous-porteuse de cette composante de $+\pi/2$. En outre, il est nécessaire d'augmenter la phase de la sous-porteuse de la composante v(t) de la $n+1^{ième}$ ligne de la trame numéro I de $+\pi$. La valeur du signal de chrominance de la $n^{ième}$ ligne de la trame numéro II peut donc être présentée par la formule :

$$C_n(\text{trame II}) = \frac{1}{2} \left[ \begin{array}{c} C_n{}'(\text{trame I}) \\ \text{décalé de } -\frac{\pi}{2} \end{array} \right] + \left[ \begin{array}{c} C_{n+1}(\text{trame I}) \\ \text{décalé de } \pi \end{array} \right]$$

où $C_n{}'$ (trame I) est la valeur du signal de chrominance conjugué pour un point de la $n^{ième}$ ligne de la trame numéro I, et où $C_{n+1}$ (trame I) est la valeur du signal de chrominance pour le point homologue sur la $n+1^{ième}$ ligne de la trame numéro 1.

Un décalage de $\pi$ pouvant être réalisé par un simple changement de signe la formule précédente devient :

$$C_n(\text{trame II}) = \frac{1}{2} \left[ \begin{array}{c} C_n{}'(\text{trame I}) \\ \text{décalé de } \frac{\pi}{2} \end{array} \right] - \left[ \begin{array}{c} C_n(\text{trame I}) . \\ \text{sans décalage} \end{array} \right]$$

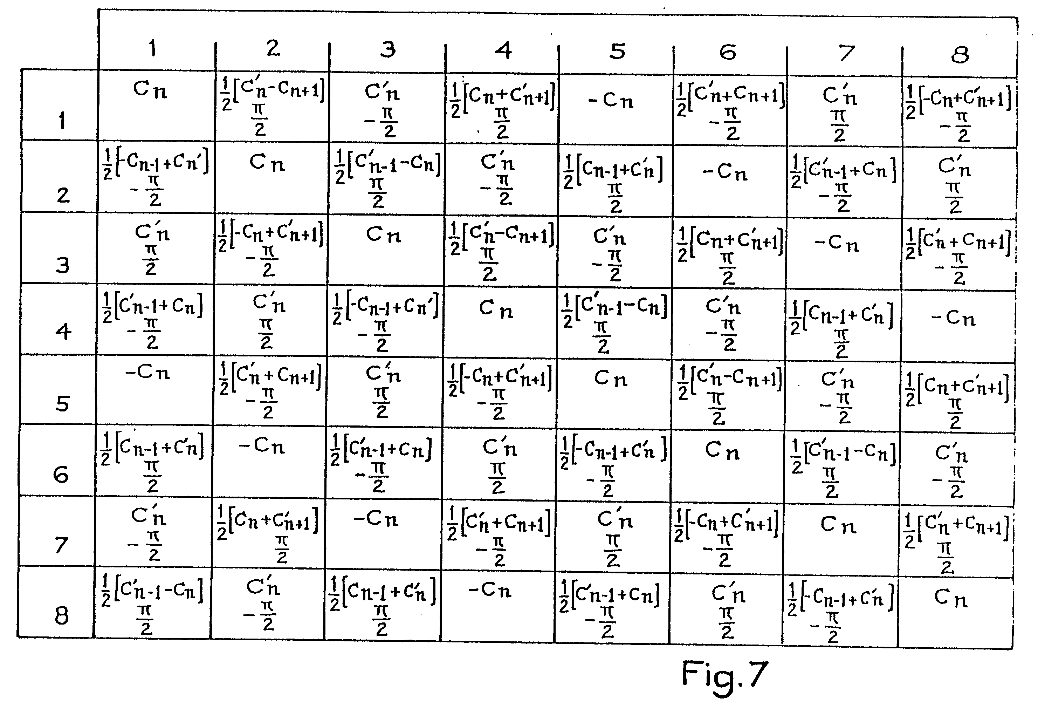

La figure 7 présente les formules à utiliser dans les 64 cas possibles pour reconstituer les valeurs du signal de chrominance d'une trame en fonction des valeurs du signal de chrominance d'une autre trame stockée en mémoire. Les valeurs de déphasage à réaliser sont notées en-dessous des symboles des valeurs des signaux à déphaser.

Pour calculer une valeur de chrominance pour un point de la $n^{ième}$ ligne d'une trame il est nécessaire de connaître les valeurs de chrominance $C_{n-1}$, $C_n$, et $C_{n+1}$ des points homologues respectivement sur la $n-1^{ième}$, la $n^{ième}$ et la $n+1^{ième}$ ligne de la trame stockée en mémoire. Un moyen simple de disposer de ces valeurs consiste à lire dans la mémoire de trame une seule fois chacune des valeurs du signal vidéo composite de la trame stockée, puis à retarder ces valeurs successivement par deux dispositifs à retard d'une ligne. En fait à chaque instant il n'est nécessaire de connaître que deux valeurs du signal vidéo composite, une valeur correspondant à la $n^{ième}$ ligne et une valeur correspondant soit à la $n-1^{ième}$ ligne soit à la $n+1^{ième}$ ligne. Il est donc possible de supprimer un des dispositifs à

8

retard d'une ligne à condition d'opérer un décalage dans la suite des valeurs d'adresses de lecture de la mémoire de trame. Soit m le rang de la ligne correspondant à la valeur du signal vidéo composite fourni à l'instant considéré par la mémoire de trame, et $m-1$ le rang de la ligne correspondant à la valeur fournie par le dispositif à retard d'une ligne. Par exemple pour reconstituer les valeurs de chrominance de la trame numéro II à partir de celles d'une trame numéro I stockée, l'adressage de la mémoire de trame doit être réalisé de telle façon que $m = n + 1$ et $m - 1 = n$. Par contre, pour calculer les valeurs de chrominance correspondant à une trame numéro III à partir d'une trame numéro II stockée, l'adressage de la mémoire de trame doit être tel que : $m - 1 = n - 1$ et $m = n$. Dans le premier exemple les valeurs d'adresse de lecture de la mémoire de trame sont décalées d'une valeur correspondant au nombre de points d'une ligne et dans le deuxième exemple il n'y a pas de décalage.

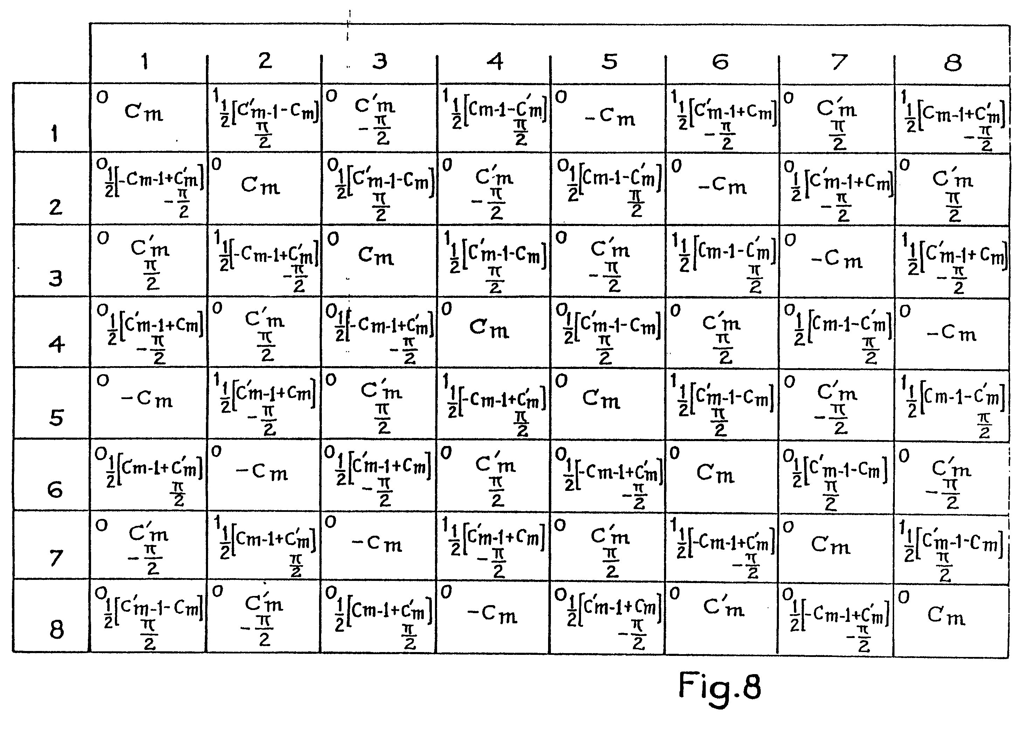

La figure 8 représente un tableau indiquant pour les 64 cas de la figure 7, d'une part les formules de calcul des valeurs de chrominance modifiées de façon à ne faire apparaître que des valeurs de chrominance d'indice m et d'indice $m - 1$, d'autre part indiquant dans le coin supérieur gauche de chaque case du tableau une valeur 0 ou 1 traduisant respectivement une absence de décalage ou un décalage pour l'adressage de la mémoire de trame. Le tableau de la figure 8 peut être beaucoup simplifié car les formules de calcul se ressemblent beaucoup.

Si on pose que :

$$Q_1 = C_m$$

$$Q_2 = \frac{1}{2} \left[ C'_{m-1} - C_m \right]_{-\frac{\pi}{2}}$$

$$Q_3 = C'_{m_{-\frac{\pi}{2}}}$$

$$Q_4 = \frac{1}{2} \left[ C_{m-1} - C'_{m} \right]_{\frac{\pi}{2}}$$

Il apparaît que :

$$- C_m = - Q_1$$

$$\frac{1}{2} \left[ C'_{m-1} + C_m \right]_{-\frac{\pi}{2}} = - \frac{1}{2} \left[ C'_{m-1} - C_m \right]_{\frac{\pi}{2}} = - Q_2$$

$$C'_{m_{\frac{\pi}{2}}} = - C'_{m_{-\frac{\pi}{2}}} = - Q_3$$

$$\frac{1}{2} - \left[ C_{m-1} + C'_{m} \right]_{\frac{\pi}{2}} = - \frac{1}{2} \left[ C_{m-1} + C'_{m} \right]_{-\frac{\pi}{2}} = - Q_4$$

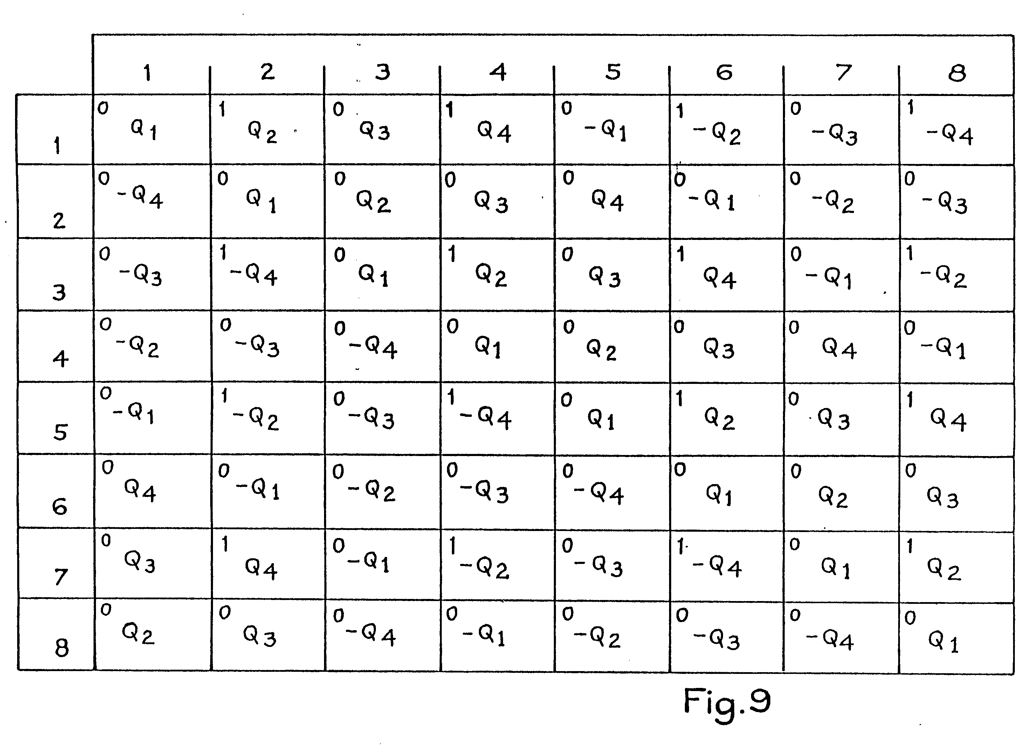

Le tableau de la figure 9 représente le tableau de la figure 8 en remplaçant les formules par les valeurs : $\pm Q_1$, $\pm Q_2$, $\pm Q_3$, $\pm Q_4$, ce qui le simplifie beaucoup.

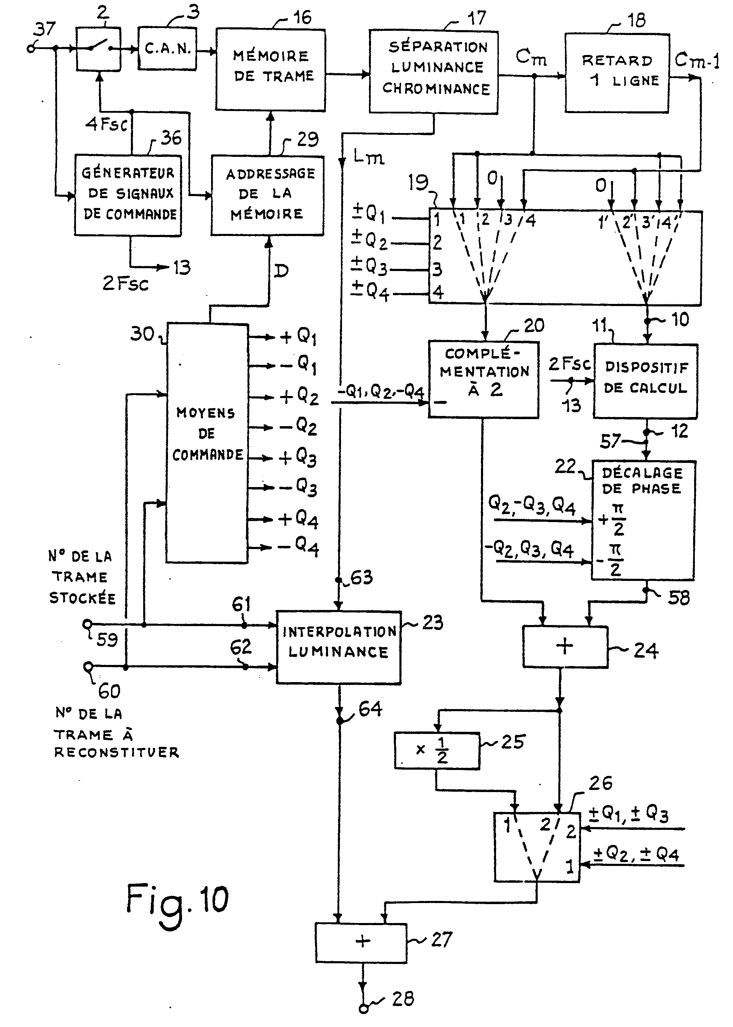

La figure 10 représente le schéma synoptique d'un exemple de réalisation d'un dispositif de reconstitution d'une suite d'images selon l'invention. Les éléments analogues à ceux du dispositif représenté sur la figure 4 conservent la même référence numérique. Les éléments constituant le dispositif 14 d'inversion d'une des composantes d'un signal de chrominance se trouvent dispersés dans le dispositif représenté sur la figure 10. Le dispositif de reconstitution d'une suite d'images comporte un échantillonneur 2, un convertisseur analogique-numérique 3, une mémoire de trame 16, un dispositif numérique 17 de séparation d'un signal de luminance et d'un signal de chrominance, un dispositif 18 à retard de une ligne, un multiplexeur 19 à huit entrées et deux sorties, un dispositif 20 de complémentation à 2, un dispositif de calcul 11, un dispositif 22 de décalage de phase, un dispositif 23 d'interpolation d'un signal de luminance, un additionneur 24, un diviseur par deux 25, un multiplexeur 26 à deux entrées et une sortie, un additionneur 27, un dispositif 29 d'adressage de la mémoire, des moyens de commande 30, et un générateur de signaux de commande 36. Le dispositif 17 peut être constitué d'un filtre numérique 4 et d'un soustracteur numérique 5 comme pour le dispositif de la figure 4. Dans cet exemple le dispositif de reconstitution d'une suite d'images est reliée à un magnétoscope analogique qui fournit : à une borne d'entrée 37 un signal vidéo composite, à une borne d'entrée 59 le numéro de la trame qui est stockée dans la mémoire de trame 16, et à une borne d'entrée 60 le numéro de la trame à reconstituer à l'instant considéré. Le signal vidéo composite est échantillonné et numérisé à la fréquence $4f_{sc}$ par l'échantillonneur 2 et le convertisseur 3. La mémoire de trame 16 comporte une entrée de données reliée à la sortie du convertisseur 3, une entrée d'adresse reliée à une sortie du dispositif 29 d'adressage de la mémoire, et une sortie reliée à une entrée du dispositif 17 de séparation d'un signal de luminance et d'un signal de chrominance. Les moyens de commande 30 possèdent une première et une seconde entrée reliées respectivement aux bornes d'entrée 59 et 60 afin d'élaborer des signaux de commande symbolisés par $+ Q_1, — Q_1, + Q_2, — Q_2, + Q_3, — Q_3, — Q_4$, et D. Le signal logique D est fourni à une entrée du dispositif d'adressage 29 pour commander un décalage de l'adresse de lecture de la mémoire 16 selon les valeurs indiquées dans le coin supérieur gauche des cases des tableaux représentés sur les figures 8 et 9. Les signaux de commande $+ Q_1, ..., — Q_4$ correspondent chacun à une formule de calcul des valeurs de chrominance, et sont élaborés en fonction du numéro de la trame stockée et du numéro de la trame à reconstituer, conformément au tableau représenté sur la figure 9. Le générateur 36 de signaux de commande est identique à celui représenté sur la figure 4. Sa première sortie est reliée à une entrée de commande de l'échantillonneur 2 et à une entrée du dispositif d'adressage 29 et sa seconde sortie est reliée à la borne d'entrée 13 du dispositif 11, analogue au dispositif 11 représenté sur la figure 4. La lecture de la mémoire 16 est réalisée au rythme $4f_{sc}$ défini par le premier signal de commande fourni par le générateur 36. Le dispositif 17 de séparation d'un signal de luminance et d'un signal de chrominance réalise un filtrage numérique, il fournit une valeur $L_m$ d'un signal de luminance à une borne d'entrée 63 du dispositif 23 d'interpolation d'un signal de luminance et il fournit une valeur $C_m$ d'un signal de chrominance à une entrée du dispositif 18 à retard de une ligne. Le dispositif 23 possède des bornes d'entrée 61 et 62 recevant respectivement le numéro de la trame stockée et le numéro de la trame à reconstituer, et possède une borne de sortie 64 reliée à une première entrée de l'additionneur 27. Le dispositif d'interpolation 23 détermine une suite de valeurs de luminance en fonction des valeurs de luminance fournies par le dispositif de séparation 17, en fonction du numéro de la trame stockée, et en fonction du numéro de la trame à reconstituer ; son fonctionnement sera décrit plus loin.

Le dispositif à retard 18, le multiplexeur 19, les dispositifs 11, 20, 22, l'additionneur 24, le diviseur par deux 25, et le multiplexeur 27 déterminent des valeurs de chrominance reconstituées à partir des valeurs de signal vidéo composite qui sont stockées. Le multiplexeur 19 comporte : deux groupes de quatre entrées notées 1, 2, 3, 4, et 1', 2', 3', 4' ; huit entrées de commande recevant les signaux $+ Q_1, — Q_1, ..., — Q_4$ ; et deux sorties. Sous l'action du signal $+ Q_1$ ou $— Q_1$ l'entrée 1 est reliée à la première sortie et l'entrée 1' est reliée à la seconde sortie. Sous l'action du signal $+ Q_2$ ou $— Q_2$ l'entrée 2 est reliée à la première sortie et l'entrée 2' est reliée à la seconde sortie. Sous l'action du signal $+ Q_3$ ou $— Q_3$ l'entrée 3 est reliée à la première sortie et l'entrée 3' est reliée à la seconde sortie. Sous l'action du signal $+ Q_4$ ou $— Q_4$ l'entrée 4 est reliée à la première sortie et l'entrée 4' est reliée à la seconde sortie. D'autre part, les entrées 1, 2, 3', et 4' sont reliées à la sortie du dispositif de séparation 17, les entrées 4 et 2' sont reliées à la sortie du dispositif à retard 18, et les entrées 3 et 1' reçoivent en permanence une valeur 0. La première et la seconde sortie du multiplexeur 19 sont reliées respectivement à une entrée du dispositif 20 de complémentation à deux, et à la borne d'entrée 10 du dispositif de calcul 11. Le dispositif 20 de complémentation à deux comporte une entrée de commande qui provoque une complémentation à deux lorsqu'elle reçoit le signal logique $— Q_1$. En l'absence de ce signal le dispositif 20 transmet sans modification la valeur numérique qu'il reçoit sur son entrée. Une sortie du dispositif 20 est reliée à une première entrée de l'additionneur 24. La borne de sortie 12 du dispositif de calcul 11 est reliée à une borne d'entrée 57 du dispositif 22 de décalage de phase. Le dispositif 22 possède des premières entrées de commande commandant un déphasage de $+ \pi/2$ sous l'action du signal logique $Q_2$ ou $— Q_3$, ou $Q_4$ ; et des secondes entrées de commande provoquant un déphasage de $— \pi/2$ sous l'action d'un signal logique $— Q_2$, ou $Q_3$, ou $— Q_4$ ; et une borne de sortie 58 reliée à une seconde entrée de l'additionneur 24. Le dispositif 22 sera décrit plus loin. Le multiplexeur 26 possède : deux entrées notées 1 et 2, des entrées de commande recevant les signaux logiques $+ Q_1, — Q_1, ..., — Q_4$, et une sortie. Sous l'action des signaux logiques $+ Q_2$, ou $— Q_2$, ou $+ Q_4$, ou $— Q_4$, l'entrée 1 est reliée à la sortie. Sous l'action du signal logique $+ Q_1$, ou $— Q_1$, ou $+ Q_3$, ou $— Q_3$, l'entrée 2 est reliée à la sortie. La sortie du multiplexeur 26 est reliée à la seconde entrée de l'additionneur 27, et la sortie de l'additionneur 27 est reliée à une borne de sortie 28 constituant la sortie du dispositif de reconstitution d'une suite d'images. Une sortie de l'additionneur 24 est reliée d'une part à une entrée du diviseur par deux 25, et d'autre part à l'entrée 2 du multiplexeur 26. Une sortie du diviseur par deux 25 est reliée à l'entrée 1 du multiplexeur 26.

A chaque instant le dispositif 17 de séparation d'un signal de luminance et d'un signal de chrominance fournit une valeur $C_m$ du signal de chrominance correspondant à un point de la ligne de rang m, et la sortie du dispositif 18 à retard de une ligne fournit une valeur $C_{m-1}$ du signal de chrominance du point homologue sur la ligne de rang m — 1. Le multiplexeur 19 sélectionne les variables constituant les formules données dans le tableau de la figure 8, le dispositif 20 de complémentation à deux effectue le cas échéant un changement de signe sur l'une de ces variables, le dispositif 11 détermine la valeur conjuguée d'une des variables, le dispositif 22 décale la phase de cette variable de $+ \pi/2$ ou de $- \pi/2$ selon le cas, l'additionneur 24 et le diviseur par deux 25 effectuent la demi-somme des variables dans les cas où c'est nécessaire, sinon le multiplexeur 26 transmet directement la valeur fournie par l'additionneur 24 vers l'additionneur 27 qui reconstitue une valeur d'un signal vidéo composite en additionnant la valeur du signal de chrominance ainsi reconstitué à la valeur du signal de luminance fournie par le dispositif 23 d'interpolation d'un signal de luminance.

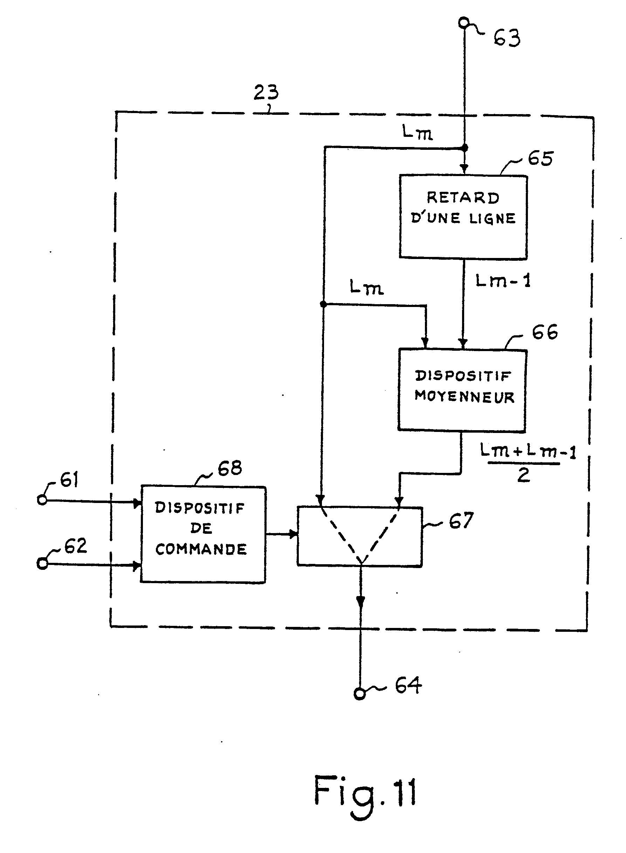

La figure 11 représente un schéma synoptique du dispositif 23 d'interpolation d'un signal de luminance. Il comporte un dispositif 65 à retard d'une ligne, un dispositif moyenneur 66, un multiplexeur 67 à deux entrées et une sortie, et un dispositif de commande 68. A l'instant considéré la borne d'entrée 63 reçoit une valeur de luminance $L_m$ correspondant à un point de la ligne de rang m, et les bornes d'entrée 61 et 62 reçoivent respectivement le numéro de la trame stockée en mémoire et le numéro de la trame à reconstituer. Le dispositif de commande 68 reçoit ces valeurs de numéros, calcule leur différence et génère un signal logique si cette différence a une valeur paire. Ce signal logique est appliqué à une entrée de commande du multiplexeur 67 et provoque l'acheminement de la valeur de luminance $L_m$ de la borne d'entrée 63 vers la borne de sortie 64 car dans ce cas les valeurs de luminance des points de la trame à reconstituer peuvent être prises égales aux valeurs de luminance des points de la trame stockée. Dans le cas contraire le multiplexeur 67 relie une sortie du dispositif moyenneur 66 à la borne de sortie 64 pour lui fournir une valeur $(L_m + L_{m-1})/2$ qui constitue une moyenne de la valeur $L_m$ fournie par la borne d'entrée (63) et d'une valeur $L_{m-1}$ fournie par le dispositif 65 à retard d'une ligne et correspondant à la luminance d'un point homologue sur la ligne de rang m — 1. Une entrée du dispositif 65 est reliée à la borne d'entrée 63.

La figure 12 représente le schéma synoptique d'un exemple de réalisation du dispositif 22 de décalage de phase. Ce dispositif comporte deux registres 51 et 52 pouvant stocker chacun une valeur numérique, un multiplexeur 53 à quatre entrées et deux sorties, un dispositif 54 de complémentation à deux, un additionneur 55, et un diviseur par deux 56. La borne d'entrée 57 du dispositif 22 reçoit, à l'instant considéré, une valeur $C'(t)$ d'un signal de chrominance conjugué. Au même instant la sortie du registre 51 fournit une valeur

$$C'\left(t - \frac{1}{4\,f_{cs}}\right)$$

et la sortie du registre 52 fournit une valeur

$$C'\left(t - \frac{1}{2\,f_{sc}}\right).$$

Les registres 51 et 52 retardent les valeurs fournies par la borne d'entrée 57 chacun d'un temps égal à une période d'échantillonnage. Ils sont commandés par le signal de fréquence $4f_{sc}$ fourni par la première sortie du générateur 36. Le multiplexeur 53 possède deux premières entrées notées 1, et 2 ; deux secondes entrées notées 1', et 2' ; une première sortie et une seconde sortie ; et des entrées de commande. Lorsque ces entrées de commande reçoivent le signal logique $Q_2$, ou $- Q_3$, ou $Q_4$, l'entrée 1 est reliée à la première sortie et l'entrée 1' est reliée à la seconde sortie. Lorsque ces entrées de commande reçoivent le signal logique $- Q_2$, ou $Q_3$, ou $- Q_4$, l'entrée 2 est reliée à la première sortie et l'entrée 2' est reliée à la seconde sortie. Les entrées 1 et 2' du multiplexeur 53 reçoivent la valeur $C'(t)$ fournie par la borne d'entrée 57. Les entrées 2 et 1' du multiplexeur 53 reçoivent la valeur

$$C'\left(t - \frac{1}{2\,f_{sc}}\right)$$

fournie par la sortie du registre 52. La première sortie du multiplexeur 53 est reliée à une première entrée de l'additionneur 55, la seconde sortie est reliée à une entrée du dispositif 54 de complémentation à deux. La sortie du dispositif 54 est reliée à une seconde entrée de l'additionneur 55. La sortie de l'additionneur 55 est reliée à une entrée du diviseur par deux 56, et une sortie de ce dernier est reliée à la borne de sortie 58 du dispositif 22. Selon le signal logique commandant le multiplexeur 53 le dispositif 22 détemine une valeur égale à :

$$\frac{1}{2}\left[C'(t) - C'\left(t - \frac{1}{2\,f_{sc}}\right)\right]$$

ou

$$\frac{1}{2}\left[C'\left(t - \frac{1}{2\,f_{sc}}\right) - C'(t)\right]$$

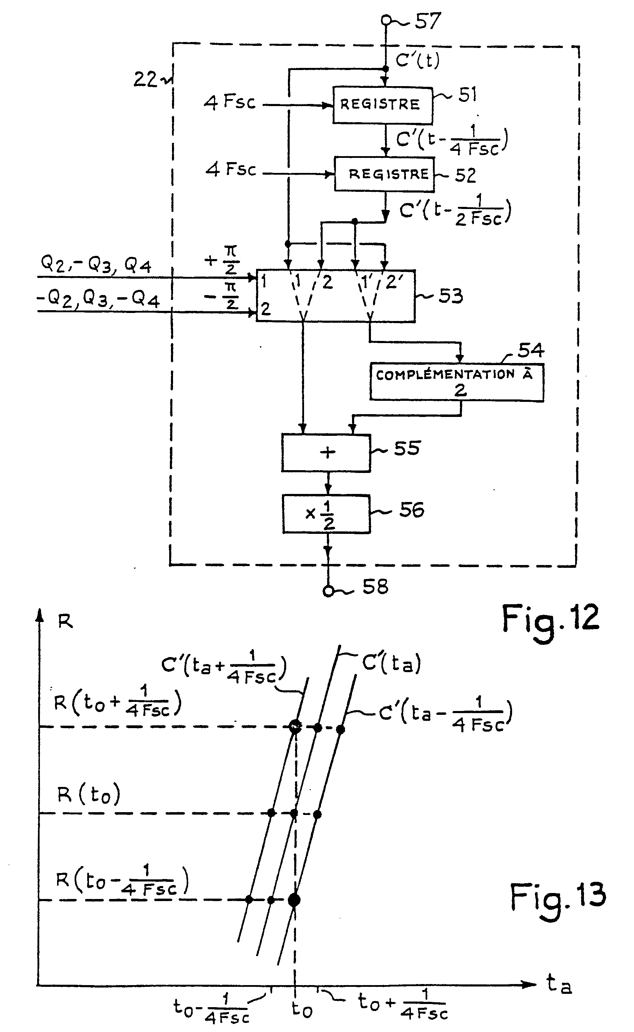

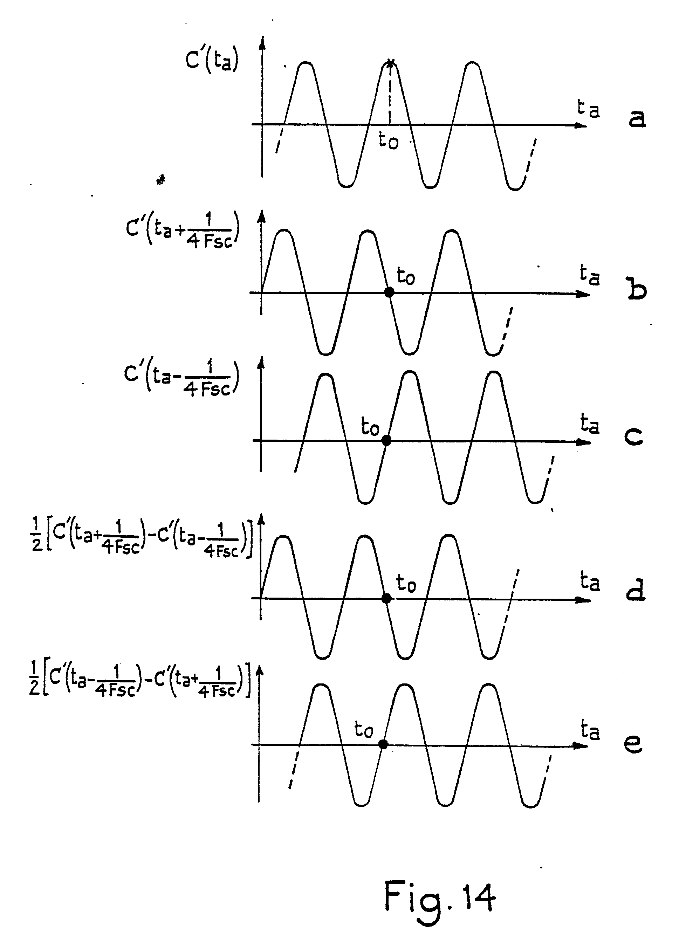

Les figures 13 et 14a illustrent le fonctionnement du dispositif 22. Considérons le changement de variable suivant :

$$t_a = t - \frac{1}{4 f_{sc}} .$$

Les valeurs $C'(t_a)$ sont les valeurs fournies par la sortie du registre 51, les valeurs

$$C'\left(t_a - \frac{1}{4 f_{sc}}\right)$$

sont les valeurs fournies par la sortie du registre 52, et les valeurs

$$C'\left(t_a + \frac{1}{4 f_{sc}}\right)$$

sont les valeurs fournies par la borne d'entrée 57 au registre 51. Ces trois suites de valeurs sont identiques mais décalées chacune d'une période d'échantillonnage. La fréquence d'échantillonnage étant égale à 4 fois la fréquence des sous-porteuses ces décalages temporels provoquent un déphasage de $\pm \pi/2$ des sous-porteuses par rapport à leur phase originale. Ces décalages temporels permettent donc de réaliser les déphasages de $\pm \pi/2$ nécessaires pour additionner des signaux de chrominance correspondant à des lignes différentes. Malheureusement un décalage temporel des sous-porteuses provoque aussi un décalage temporel des informations de chrominance qui se traduit visuellement par un sautillement horizontal des transitions colorées au cours de la reconstitution d'un cycle de huit trames puisque les formules de calcul sont différentes pour les huit trames. C'est pourquoi les valeurs retardées par les registres 51 et 52 ne sont pas utilisées directement comme valeurs déphasées de $\pm \pi/2$.

La figure 13 représente les graphes de trois signaux R traduisant la saturation de la couleur rouge en fonction du temps $t_a$ pour les signaux de chrominance de valeurs

$$C'\left(t_a + \frac{1}{4 f_{sc}}\right)$$

$C'(t_a)$, et

$$C'\left(t_a - \frac{1}{4 f_{sc}}\right).$$

Dans cet exemple les valeurs de R sont croissantes, ce qui traduit une transition colorée. Soit $R(t_0)$ la valeur du signal de couleur rouge à l'instant $t_0$, les trois graphes passent par cette même valeur à trois instants séparés d'un intervalle correspondant à une période d'échantillonnage, ce qui correspond à des transitions colorées qui seraient décalées horizontalement d'un point d'image. Ce décalage est gênant car il est variable au cours de la reconstitution d'un cycle de huit trames et provoque donc un sautillement horizontal des transitions colorées. Par contre il est à remarquer que, dans la mesure où les graphes peuvent être considérés comme linéaires dans le voisinage de l'instant $t_0$, la valeur $R(t_0)$ peut être considérée comme égale à la moyenne de la valeur

$$R\left(t_0 + \frac{1}{4 f_{sc}}\right)$$

correspondant à la valeur

$$C'\left(t_0 + \frac{1}{4 f_{sc}}\right)$$

et de la valeur

$$R\left(t_0 - \frac{1}{4 f_{sc}}\right)$$

correspondant à la valeur

$$C'\left(t_0 - \frac{1}{4 f_{sc}}\right)$$

du signal de chrominance. Les signaux de couleurs, tels que le signal R, et le signal de chrominance $C'(t_a)$ étant reliés par une relation linéaire la valeur moyenne des deux valeurs de R correspond à la valeur moyenne des deux valeurs de C', et c'est cette dernière qui est calculée par le dispositif 22. A un instant donné la valeur du signal de chrominance fournie par le dispositif 22 porte les mêmes informations de couleur que le signal de chrominance fourni par la sortie du registre 51, que le déphasage soit de $+ \pi/2$ ou de $- \pi/2$, donc il n'y a pas de sautillement des transitions colorées.

Les figures 14a, b, c, d, et e, illustrent le fonctionnement du dispositif 22 en ce qui concerne le déphasage. Elle représentent respectivement les graphes temporels des signaux $C'(t_a)$,

$$C'\left(t_a + \frac{1}{4\,f_{sc}}\right), \quad \frac{1}{2}\left[C'\left(t_a + \frac{1}{4\,f_{sc}}\right) - C'\left(t_a - \frac{1}{4\,f_{sc}}\right)\right] \quad et \quad \frac{1}{2}\left[C'\left(t_a - \frac{1}{4\,f_{sc}}\right) - C'\left(t_a + \frac{1}{4\,f_{sc}}\right)\right]$$

La figure 14d permet de vérifier que le signal de valeur

$$\frac{1}{2}\left[C'\left(t_a + \frac{1}{4\,f_{sc}}\right) - C'\left(t_a - \frac{1}{4\,f_{sc}}\right)\right]$$

est déphasé de $- \pi/2$ par rapport au signal $C'(t_a)$, et la figure 14e permet de vérifier que le signal

$$\frac{1}{2}\left[C'\left(t_a - \frac{1}{4\,f_{sc}}\right) - C'\left(t_a + \frac{1}{4\,f_{sc}}\right)\right]$$

est déphasé de $+ \pi/2$ par rapport au signal $C'(t_a)$.

L'adaptation de ce dispositif de reconstitution d'une suite d'images pour traiter un signal vidéo composite PAL-M est à la portée de l'homme de l'art. Un tel signal diffère d'un signal PAL par la fréquence des sous-porteuses de chrominance

$$f_{sc} = \frac{909}{4}\, F_H$$

et par le nombre de lignes par trame. Le glissement de la phase des sous-porteuses par rapport à la synchronisation ligne prend des valeurs différentes. Sur la figure 6 les valeurs $\varphi + \pi/2$ sont remplacées par $\varphi - \pi/2$ et réciproquement. Les valeurs $\varphi$ et $+ \pi$ sont conservées. Les formules des tableaux des figures 7 et 8 sont à modifier en conséquence.

Ce dispositif est utilisable notamment dans les magnétoscopes à enregistrement segmenté et dans les systèmes de transmission d'images par une ligne téléphonique, ou toute autre source fournissant un signal vidéo PAL ou PAL-M correspondant à une seule trame.

L'invention n'est pas limitée à l'exemple de réalisation décrit ci-dessus. Il est à la portée de l'homme de l'art de réaliser de nombreuses variantes.

## Revendications

1. Dispositif numérique pour reconstituer une suite d'images vidéo PAL ou PAL-M à partir d'une trame unique, stockée en mémoire, comportant :
   — des moyens (2, 3) pour échantillonner et numériser un signal vidéo composite ;
   — des moyens (16 et 29) pour stocker et restituer les valeurs du signal vidéo composite correspondant à une trame ;
   — des moyens (17) pour déterminer une valeur de luminance et une valeur de chrominance pour chaque valeur de signal vidéo composite restituée ;
   — des moyens (23) pour reconstituer les valeurs de luminance correspondant à une ligne d'une trame à reconstituer, à partir des valeurs de luminance de la ligne homologue, ou des deux lignes les plus proches, dans la trame stockée ;
   — des moyens pour reconstituer les valeurs de chrominance correspondant à une ligne d'une trame à reconstituer, à partir des valeurs de chrominance de la ligne homologue ou des deux lignes les plus proches dans la trame stockée, ces moyens comportant : des moyens (36, 11) pour inverser l'une des composantes d'un signal de chrominance PAL ou PAL-M, et au moins un dispositif (18) à retard d'une ligne, pour disposer de deux valeurs de chrominance $C_{m-1}$ et $C_m$ correspondant à deux points homologues de deux lignes successives de la trame stockée ;
   — un additionneur (27), pour fournir un signal vidéo composite en additionnant les valeurs fournies par les moyens (23) pour reconstituer les valeurs de luminance, avec les valeurs fournies par les moyens pour reconstituer les valeurs de chrominance ;

caractérisé en ce que les moyens pour reconstituer les valeurs de chrominance comportent en outre :

— un dispositif (22) de décalage de la phase des valeurs d'un signal de chrominance, ayant des entrées de commande commandant un déphasage de + π/2, ou — π/2 ;

— des moyens de calcul (19, 20, 24, 25, 26) pour calculer une valeur de chrominance reconstituée ;

— des moyens de commande (30) commandant les moyens de calcul (19, 20, 24, 25, 26) et le dispositif (22) de décalage de phase, en fonction du numéro de la trame à reconstituer et en fonction du numéro de la trame stockée.

2. Dispositif selon la revendication 1, caractérisé en ce que les moyens pour inverser l'une des composantes d'un signal de chrominance, dont la sous-porteuse a pour fréquence $f_{sc}$, comportent :

— un générateur (36) de signaux de commande, pour générer un premier signal de commande, de fréquence $4f_{sc}$ ayant un retard fixe, nul ou égal à une demi-période d'échantillonnage par rapport aux instants de passage à zéro de la sous-porteuse de l'une des composantes du signal de chrominance, et pour générer un second signal de commande ayant pour fréquence $2f_{sc}$ ;

— des moyens (17, 2, 3) pour séparer et échantillonner le signal de chrominance, et le numériser, sous la commande du premier signal de commande ;

— un dispositif de calcul (11) pour changer le signe d'une valeur sur deux du signal de chrominance, sous la commande du second signal de commande et déterminer ainsi les valeurs d'un signal de chrominance conjugué.

3. Dispositif de traitement selon la revendication 1, caractérisé en ce que le dispositif (22) de décalage de la phase d'un signal de chrominance comporte : deux registres (51, 52) montés en série pour disposer de deux valeurs de chrominance correspondant à un intervalle de deux périodes d'échantillonnage ; et comporte un multiplexeur (53), un dispositif (54) de complémentation à deux, un additionneur (55), et un diviseur par deux (56), qui calculent la demi-différence des deux valeurs de chrominance pour obtenir une valeur de chrominance déphasée de ± π/2, le signe de cette demi-différence correspondant au signe du décalage de phase obtenu.

**Claims**

1. Digital device for the reconstitution of a sequence of PAL or PAL-M video images from a single frame stored in a memory, comprising :

— means (2, 3) for sampling and digitalizing a composite video signal ;

— means (16 and 29) for storing and restituting the values of the composite video signal corresponding to a frame ;

— means (17) for determining a luminance value and a chrominance value for each value of restituted composite video signal ;

— means (23) for the reconstitution of the luminance values corresponding to a line of a frame to be reconstituted, from the luminance values of the corresponding line or the two closest lines in the stored frame ;

— means for the reconstitution of the chrominance values corresponding to a line of a frame to be reconstituted, from the chrominance values of the corresponding line or the two closest lines in the stored frame, these means comprising : means (36, 11) for inverting one of the components of a PAL or PAL-M chrominance signal and at least one device (18) delaying by one line, in order to provide two chrominance values $C_{m-1}$ and $C_m$ corresponding to two corresponding points of two successive lines of the stored frame ;

— an adder (27) for supplying a composite video signal by adding the values supplied by the means (23) for the reconstitution of the luminance values with the values supplied by the means for the reconstitution of the chrominance values ;

characterized in that the means for the reconstitution of the chrominance values further comprise :

— a device (22) for the phase shifting of the values of a chrominance signal, having control inputs controlling a phase shift by + π/2, or — π/2 ;

— computing means (19, 20, 24, 25, 26) for calculating a reconstituted chrominance value ;

— control means (30) controlling the computing means (19, 20, 24, 25, 26) and the phase shifting device (22) as a function of the number of the frame to be reconstituted and as a function of the number of the stored frame.

2. Device according to claim 1, characterized in that the means for inverting one of the components of a chrominance signal the sub-carrier of which has the frequency $f_{sc}$ comprise :

— a control signal generator (36) to generate a first control signal of the frequency $4f_{sc}$ having a fixed delay, equal to zero or a sampling half-period, with respect to the zero crossing moments of the sub-carrier of one of the components of the chrominance signal, and to generate a second control signal having the frequency $2f_{sc}$ ;

— means (17, 2, 3) to separate and sample the chrominance signal and to digitalize same under control of the first control signal ;

— a computing device (11) to change the sign of every second value of the chrominance signal under control of the second control signal, and to thus determine the values of a conjugate chrominance signal.

3. Processing device according to claim 1, characterized in that the device (22) for the phase shifting of a chrominance signal comprises : two series connected registers (51, 52) to provide two chrominance values corresponding to an interval of two sampling periods ; and comprises a multiplexer (53), a two's complementation device (54), an adder (55) and a divider by two (56), which calculate the half-difference of the two chrominance values to obtain a chrominance value shifted in phase by $\pm \pi/2$, the sign of this half-difference corresponding to the sign of the phase shift obtained.


**Patentansprüche**

1. Digitale Vorrichtung für die Rekonstruktion einer Folge von PAL- oder PAL-M-Videobildern aus einem einzigen, in einem Speicher abgespeicherten Teilbild, mit :
— Mitteln (2, 3) zur Abtastung und Digitalisierung eines zusammengesetzten Videosignals ;
— Mitteln (16 und 29) zum Speichern und Wiedergeben der Werte des zusammengesetzten Videosignals, die einem Teilbild entsprechen ;
— Mitteln (17) zur Bestimmung eines Luminanzwertes und eines Chrominanzwertes für jeden Wert des wiedergegebenen zusammengesetzten Videosignals ;
— Mitteln (23) für die Rekonstruktion der Luminanzwerte entsprechend einer Zeile eines zu rekonstruierenden Teilbildes aus den Luminanzwerten der entsprechenden Zeile oder der zwei am nächsten liegenden Zeilen in dem gespeicherten Teilbild ;
— Mitteln für die Rekonstruktion der Chrominanzwerte, die einer Zeile eines zu rekonstruierenden Teilbildes entsprechen, aus den Chrominanzwerten der entsprechenden Zeile oder der zwei am nächsten liegenden Zeilen in dem gespeicherten Teilbild, wobei diese Mittel umfassen : Mittel (36, 11) zum Invertieren einer der Komponenten eines PAL- oder PAL-M-Chrominanzsignals und wenigstens eine Vorrichtung (18) mit Verzögerung um eine Zeile, so daß über zwei Chrominanzwerte $C_{m-1}$ und $C_m$ verfügt wird, welche zwei entsprechenden Punkten von zwei aufeinanderfolgenden Zeilen des gespeicherten Teilbildes entsprechen ;
— einem Addierer (27), um ein zusammengesetztes Videosignal zu liefern, in dem die von den Mitteln (23) für die Rekonstruktion der Luminanzwerte gelieferten Werte zu den Werten addiert werden, welche von den Mitteln für die Rekonstruktion der Chrominanzwerte geliefert werden ;
dadurch gekennzeichnet, daß die Mittel zur Rekonstruktion der Chrominanzwerte ferner umfassen :
— eine Vorrichtung (22) zur Phasenverschiebung der Werte eines Chrominanzsignals, mit Steuereingängen, welche eine Phasenverschiebung und $+ \pi/2$ oder $- \pi/2$ steuern ;
— Rechenmittel (19, 20, 24, 25, 26) zur Berechnung eines rekonstruierten Chrominanzwertes ;
— Steuermittel, welche die Rechenmittel (19, 20, 24, 25, 26) und die Phasenverschiebevorrichtung (22) in Abhängigkeit von der Nummer des zu rekonstruierenden Teilbildes und von der Nummer des gespeicherten Teilbildes steuern.

2. Vorrichtung nach Anspruch 1, dadurch gekennzeichnet, daß die Mittel zum Invertieren einer der Komponenten eines Chrominanzsignals, dessen Unterträger die Frequenz $f_{sc}$ aufweist, umfassen :
— einen Steuersignalgenerator (36) zur Erzeugung eines ersten Steuersignals der Frequenz $4f_{sc}$ mit einer festen Verzögerung, die gleich Null oder gleich einer halben Abtastperiode ist, gegenüber den Nulldurchgangszeitpunkten des Unterträgers einer der Komponenten des Chrominanzsignals, und zur Erzeugung eines zweiten Steuersignals, dessen Frequenz $2f_{sc}$ beträgt ;
— Mittel (17, 2, 3) zum Trennen und Abtasten des Chrominanzsignals und Digitalisieren desselben unter der Steuerung durch das erste Steuersignal ;
— eine Rechenvorrichtung (11) zum Verändern des Vorzeichens jedes zweiten Wertes des Chrominanzsignals unter Steuerung durch das zweite Steuersignal, um so die Werte eines konjugierten Chrominanzsignals zu bestimmen.

3. Verarbeitungsvorrichtung nach Anspruch 1, dadurch gekennzeichnet, daß die Phasenverschiebevorrichtung (22) für das Chrominanzsignal umfaßt : zwei in Reihe geschaltete Register (51, 52), um über zwei Chromanzwerte zu verfügen, welche einem Intervall von zwei Abtastperioden entsprechen ; und einen Multiplexer (53), eine Vorrichtung (54) für die Zweierkomplementbildung, einen Addierer (55) und einen durch zwei teilenden Teiler (56) umfaßt, welche die Halbdifferenz der zwei Chrominanzwerte berechnen, um einen um $\pm \pi/2$ phasenverschobenen Chrominanzwert zu erhalten, wobei das Vorzeichen dieser Halbdifferenz dem Vorzeichen der erhaltenen Phasenverschiebung entspricht.

**Fig.1**

**Fig.2**

**Fig.3**

Fig. 4

C.A.N

EXTRACTION DE LA SALVE DE RÉFÉRENCE

COMPARATEUR DE PHASE

OSCILLATEUR

DIVISEUR DE FRÉQUENCE

FILTRE CHROMINANCE

COMPLÉMENTATION À 2

$C(t)$

$C'(t)$

$-C(t)$

$2F_{sc}$

$4F_{sc}$

$2F_{sc}$

$F_{sc}$

$y(t)$

Fig.5

0 113 294

**1** | $-V\ \varphi+\frac{\pi}{2}\ (n-1)$ | $+V\ \varphi\ (n)$ | $-V\ \varphi-\frac{\pi}{2}\ (n+1)$ | $+V\ \varphi-\pi\ (n+2)$ | $-V\ \varphi+\frac{\pi}{2}$

**2** | $-V\ \varphi-\frac{\pi}{2}\ (n-2)$ | $+V\ \varphi-\pi\ (n-1)$ | $-V\ \varphi+\frac{\pi}{2}\ (n)$ | $+V\ \varphi\ (n+1)$ | $-V\ \varphi-\frac{\pi}{2}\ (n+2)$

**3** | $+V\ \varphi\ (n-1)$ | $-V\ \varphi-\frac{\pi}{2}\ (n)$ | $+V\ \varphi-\pi\ (n+1)$ | $-V\ \varphi+\frac{\pi}{2}\ (n+2)$ | $+V\ \varphi$

**4** | $\varphi-\pi\ (n-2)$ | $-V\ \varphi+\frac{\pi}{2}\ (n-1)$ | $+V\ \varphi\ (n)$ | $-V\ \varphi-\frac{\pi}{2}\ (n+1)$ | $+V\ \varphi-\pi\ (n+2)$

**5** | $-V\ \varphi-\frac{\pi}{2}\ (n-1)$ | $+V\ \varphi-\pi\ (n)$ | $-V\ \varphi+\frac{\pi}{2}\ (n+1)$ | $+V\ \varphi\ (n+2)$ | $-V\ \varphi-\frac{\pi}{2}$

**6** | $\varphi+\frac{\pi}{2}\ (n-2)$ | $+V\ \varphi\ (n-1)$ | $-V\ \varphi-\frac{\pi}{2}\ (n)$ | $+V\ \varphi-\pi\ (n-1)$ | $-V\ \varphi+\frac{\pi}{2}\ (n+2)$

**7** | $+V\ \varphi-\pi\ (n-1)$ | $-V\ \varphi+\frac{\pi}{2}\ (n)$ | $+V\ \varphi\ (n-1)$ | $-V\ \varphi-\frac{\pi}{2}\ (n+2)$ | $+V\ \varphi-\pi$

**8** | $\varphi\ (n-2)$ | $-V\ \varphi-\frac{\pi}{2}\ (n-1)$ | $+V\ \varphi-\pi\ (n)$ | $-V\ \varphi+\frac{\pi}{2}\ (n+1)$ | $+V\ \varphi\ (n+2)$

Fig.6

| | 1 | 2 | 3 | 4 | 5 | 6 | 7 | 8 |
|---|---|---|---|---|---|---|---|---|
| **1** | $c_n$ | $\frac{1}{2}[c'_n - c_{n+1}]$ $\frac{\pi}{2}$ | $c'_n$ $-\frac{\pi}{2}$ | $\frac{1}{2}[c_n + c'_{n+1}]$ $\frac{\pi}{2}$ | $-c_n$ | $\frac{1}{2}[c'_n + c_{n+1}]$ $-\frac{\pi}{2}$ | $c'_n$ $\frac{\pi}{2}$ | $\frac{1}{2}[-c_n + c'_{n+1}]$ $-\frac{\pi}{2}$ |
| **2** | $\frac{1}{2}[-c_{n-1} + c'_n]$ $-\frac{\pi}{2}$ | $c_n$ | $\frac{1}{2}[c'_{n-1} - c_n]$ $\frac{\pi}{2}$ | $c'_n$ $-\frac{\pi}{2}$ | $\frac{1}{2}[c_{n-1} + c'_n]$ | $-c_n$ | $\frac{1}{2}[c'_{n-1} + c_n]$ $-\frac{\pi}{2}$ | $c'_n$ $\frac{\pi}{2}$ |
| **3** | $c'_n$ $\frac{\pi}{2}$ | $\frac{1}{2}[-c_n + c'_{n+1}]$ $-\frac{\pi}{2}$ | $c_n$ | $\frac{1}{2}[c'_n - c_{n+1}]$ $\frac{\pi}{2}$ | $c'_n$ $-\frac{\pi}{2}$ | $\frac{1}{2}[c_n + c'_{n+1}]$ $\frac{\pi}{2}$ | $-c_n$ | $\frac{1}{2}[c'_n + c_{n+1}]$ $-\frac{\pi}{2}$ |
| **4** | $\frac{1}{2}[c'_{n-1} + c_n]$ $-\frac{\pi}{2}$ | $c'_n$ $\frac{\pi}{2}$ | $\frac{1}{2}[-c_{n-1} + c'_n]$ $-\frac{\pi}{2}$ | $c_n$ | $\frac{1}{2}[c'_{n-1} - c_n]$ $\frac{\pi}{2}$ | $c'_n$ $-\frac{\pi}{2}$ | $\frac{1}{2}[c_{n-1} + c'_n]$ $\frac{\pi}{2}$ | $-c_n$ |
| **5** | $-c_n$ | $\frac{1}{2}[c'_n + c_{n+1}]$ $-\frac{\pi}{2}$ | $c'_n$ $\frac{\pi}{2}$ | $\frac{1}{2}[-c_n + c'_{n+1}]$ $-\frac{\pi}{2}$ | $c_n$ | $\frac{1}{2}[c'_n - c_{n+1}]$ $\frac{\pi}{2}$ | $c'_n$ $-\frac{\pi}{2}$ | $\frac{1}{2}[c_n + c'_{n+1}]$ $\frac{\pi}{2}$ |
| **6** | $\frac{1}{2}[c_{n-1} + c'_n]$ $\frac{\pi}{2}$ | $-c_n$ | $\frac{1}{2}[c'_{n-1} + c_n]$ $-\frac{\pi}{2}$ | $c'_n$ $\frac{\pi}{2}$ | $\frac{1}{2}[-c_{n-1} + c'_n]$ $-\frac{\pi}{2}$ | $c_n$ | $\frac{1}{2}[c'_{n-1} - c_n]$ $\frac{\pi}{2}$ | $c'_n$ $-\frac{\pi}{2}$ |
| **7** | $c'_n$ $-\frac{\pi}{2}$ | $\frac{1}{2}[c_n + c'_{n+1}]$ $\frac{\pi}{2}$ | $-c_n$ | $\frac{1}{2}[c'_n + c_{n+1}]$ $-\frac{\pi}{2}$ | $c'_n$ $\frac{\pi}{2}$ | $\frac{1}{2}[-c_n + c'_{n+1}]$ $-\frac{\pi}{2}$ | $c_n$ | $\frac{1}{2}[c'_n + c_{n+1}]$ $\frac{\pi}{2}$ |
| **8** | $\frac{1}{2}[c'_{n-1} - c_n]$ $\frac{\pi}{2}$ | $c'_n$ $-\frac{\pi}{2}$ | $\frac{1}{2}[c_{n-1} + c'_n]$ $\frac{\pi}{2}$ | $-c_n$ | $\frac{1}{2}[c'_{n-1} + c_n]$ $-\frac{\pi}{2}$ | $c'_n$ $\frac{\pi}{2}$ | $\frac{1}{2}[-c_{n-1} + c'_n]$ $-\frac{\pi}{2}$ | $c_n$ |

Fig.7

0 113 294

| | 1 | 2 | 3 | 4 | 5 | 6 | 7 | 8 |
|---|---|---|---|---|---|---|---|---|
| **1** | $^{0}\,C_m$ | $^{1}\,\frac{1}{2}[C'_{m-1}-C_m]$ $(\frac{\pi}{2})$ | $^{0}\,C'_m$ $(-\frac{\pi}{2})$ | $^{1}\,\frac{1}{2}[C_{m-1}-C'_m]$ $(\frac{\pi}{2})$ | $^{0}\,-C_m$ | $^{1}\,\frac{1}{2}[C'_{m-1}+C_m]$ $(-\frac{\pi}{2})$ | $^{0}\,C'_m$ $(\frac{\pi}{2})$ | $^{1}\,\frac{1}{2}[C_{m-1}+C'_m]$ $(-\frac{\pi}{2})$ |
| **2** | $^{0}\,\frac{1}{2}[-C_{m-1}+C'_m]$ $(-\frac{\pi}{2})$ | $^{0}\,C_m$ | $^{0}\,\frac{1}{2}[C'_{m-1}-C_m]$ $(\frac{\pi}{2})$ | $^{0}\,C'_m$ $(-\frac{\pi}{2})$ | $^{0}\,\frac{1}{2}[C_{m-1}-C'_m]$ $(\frac{\pi}{2})$ | $^{0}\,-C_m$ | $^{0}\,\frac{1}{2}[C'_{m-1}+C_m]$ $(-\frac{\pi}{2})$ | $^{0}\,C'_m$ $(\frac{\pi}{2})$ |
| **3** | $^{0}\,C'_m$ $(\frac{\pi}{2})$ | $^{1}\,\frac{1}{2}[-C_{m-1}+C'_m]$ $(-\frac{\pi}{2})$ | $^{0}\,C_m$ | $^{1}\,\frac{1}{2}[C'_{m-1}-C_m]$ $(\frac{\pi}{2})$ | $^{0}\,C'_m$ $(-\frac{\pi}{2})$ | $^{1}\,\frac{1}{2}[C_{m-1}-C'_m]$ $(\frac{\pi}{2})$ | $^{0}\,-C_m$ | $^{1}\,\frac{1}{2}[C'_{m-1}+C_m]$ $(-\frac{\pi}{2})$ |
| **4** | $^{0}\,\frac{1}{2}[C'_{m-1}+C_m]$ $(-\frac{\pi}{2})$ | $^{0}\,C'_m$ $(\frac{\pi}{2})$ | $^{0}\,\frac{1}{2}[-C_{m-1}+C'_m]$ $(-\frac{\pi}{2})$ | $^{0}\,C_m$ | $^{0}\,\frac{1}{2}[C'_{m-1}-C_m]$ $(\frac{\pi}{2})$ | $^{0}\,C'_m$ $(\frac{\pi}{2})$ | $^{0}\,\frac{1}{2}[C_{m-1}-C'_m]$ $(\frac{\pi}{2})$ | $^{0}\,-C_m$ |
| **5** | $^{0}\,-C_m$ | $^{1}\,\frac{1}{2}[C'_{m-1}+C_m]$ $(-\frac{\pi}{2})$ | $^{0}\,C'_m$ $(\frac{\pi}{2})$ | $^{1}\,\frac{1}{2}[-C_{m-1}+C'_m]$ $(\frac{\pi}{2})$ | $^{0}\,C_m$ | $^{1}\,\frac{1}{2}[C'_{m-1}-C_m]$ $(\frac{\pi}{2})$ | $^{0}\,C'_m$ $(-\frac{\pi}{2})$ | $^{1}\,\frac{1}{2}[C_{m-1}-C'_m]$ $(\frac{\pi}{2})$ |
| **6** | $^{0}\,\frac{1}{2}[C_{m-1}+C'_m]$ $(\frac{\pi}{2})$ | $^{0}\,-C_m$ | $^{0}\,\frac{1}{2}[C'_{m-1}+C_m]$ $(-\frac{\pi}{2})$ | $^{0}\,C'_m$ $(\frac{\pi}{2})$ | $^{0}\,\frac{1}{2}[-C_{m-1}+C'_m]$ $(-\frac{\pi}{2})$ | $^{0}\,C_m$ | $^{0}\,\frac{1}{2}[C'_{m-1}-C_m]$ $(\frac{\pi}{2})$ | $^{0}\,C'_m$ $(-\frac{\pi}{2})$ |
| **7** | $^{0}\,C'_m$ $(-\frac{\pi}{2})$ | $^{1}\,\frac{1}{2}[C_{m-1}+C'_m]$ $(\frac{\pi}{2})$ | $^{0}\,-C_m$ | $^{1}\,\frac{1}{2}[C'_{m-1}+C_m]$ $(-\frac{\pi}{2})$ | $^{0}\,C'_m$ $(\frac{\pi}{2})$ | $^{1}\,\frac{1}{2}[-C_{m-1}+C'_m]$ $(-\frac{\pi}{2})$ | $^{0}\,C_m$ | $^{1}\,\frac{1}{2}[C'_{m-1}-C_m]$ $(\frac{\pi}{2})$ |
| **8** | $^{0}\,\frac{1}{2}[C'_{m-1}-C_m]$ $(\frac{\pi}{2})$ | $^{0}\,C'_m$ $(-\frac{\pi}{2})$ | $^{0}\,\frac{1}{2}[C_{m-1}+C'_m]$ $(\frac{\pi}{2})$ | $^{0}\,-C_m$ | $^{0}\,\frac{1}{2}[C'_{m-1}+C_m]$ $(-\frac{\pi}{2})$ | $^{0}\,C'_m$ | $^{0}\,\frac{1}{2}[-C_{m-1}+C'_m]$ $(-\frac{\pi}{2})$ | $^{0}\,C_m$ |

**Fig.8**

| | 1 | 2 | 3 | 4 | 5 | 6 | 7 | 8 |
|---|---|---|---|---|---|---|---|---|
| 1 | $^0 Q_1$ | $^1 Q_2$ | $^0 Q_3$ | $^1 Q_4$ | $^0 -Q_1$ | $^1 -Q_2$ | $^0 -Q_3$ | $^1 -Q_4$ |
| 2 | $^0 -Q_4$ | $^0 Q_1$ | $^0 Q_2$ | $^0 Q_3$ | $^0 Q_4$ | $^0 -Q_1$ | $^0 -Q_2$ | $^0 -Q_3$ |
| 3 | $^0 -Q_3$ | $^1 -Q_4$ | $^0 Q_1$ | $^1 Q_2$ | $^0 Q_3$ | $^1 Q_4$ | $^0 -Q_1$ | $^1 -Q_2$ |
| 4 | $^0 -Q_2$ | $^0 -Q_3$ | $^0 -Q_4$ | $^0 Q_1$ | $^0 Q_2$ | $^0 Q_3$ | $^0 Q_4$ | $^0 -Q_1$ |
| 5 | $^0 -Q_1$ | $^1 -Q_2$ | $^0 -Q_3$ | $^1 -Q_4$ | $^0 Q_1$ | $^1 Q_2$ | $^0 Q_3$ | $^1 Q_4$ |
| 6 | $^0 Q_4$ | $^0 -Q_1$ | $^0 -Q_2$ | $^0 -Q_3$ | $^0 -Q_4$ | $^0 Q_1$ | $^0 Q_2$ | $^0 Q_3$ |
| 7 | $^0 Q_3$ | $^1 Q_4$ | $^0 -Q_1$ | $^1 -Q_2$ | $^0 -Q_3$ | $^1 -Q_4$ | $^0 Q_1$ | $^1 Q_2$ |
| 8 | $^0 Q_2$ | $^0 Q_3$ | $^0 -Q_4$ | $^0 -Q_1$ | $^0 -Q_2$ | $^0 -Q_3$ | $^0 -Q_4$ | $^0 Q_1$ |

Fig.9

0 113 294

Fig.10

0 113 294

Fig.11

Fig.12

Fig.13

Fig. 14